# EUROPEAN PATENT APPLICATION

(11) **EP 1 701 276 A2**
(43) Date of publication of application: **13.09.2006**
(21) Application number: 05251971.7
(22) Date of filing: 30.03.2005
(51) Int. Cl.: G06F 17/22, G06F 17/27

(54) **Process for preparing design procedure document and apparatus for the same**

(30) Priority: 09.03.2005 JP 2005065546; 09.03.2005 JP 2005065698
(71) Applicant: Maxis Co., Ltd., Nagoya-shi, Aichi-ken 461-0005 (JP)
(72) Inventor: Koike, Ichiro, Maxis Co., Ltd, Higashi-ku Nagoya-shi Aichi-ken 461-0005 (JP); Goto, Noriyasu, Maxis Co., Ltd, Higashi-ku Nagoya-shi Aichi-ken 461-0005 (JP); Saigo, Tomoyasu, Maxis Co., Ltd, Higashi-ku Nagoya-shi Aichi-ken 461-0005 (JP)
(74) Representative: Chettle, Adrian John

(57) **Abstract**

A process and an apparatus for automatically preparing a CAD design procedure document in which the CAD design procedure document is prepared by automatically converting CAD data into the design procedure document written in a natural language by means of a converter. The design procedure document includes elements which are written in a natural language, each element including a name of group to which the element belongs and its preparing step, and specific elements of the design procedure document are extracted. The extracted elements are extracted and rearranged together with the groups to which the elements belong and their preparing steps. The elements are displayed together with the groups and their preparing steps.

## Description

### CROSS-REFERENCE TO RELATED APPLICATION

This application is related to and claims priority from Japanese patent applications No. 2005-065546 and 2005-065698 incorporated herein by reference.

### BACKGROUND OF THE INVENTION

### 1. Field of the Invention

The present invention relates to a process and apparatus for automatically preparing a design procedure document which is written in a natural language from CAD data and for preparing an easily understandable design procedure document by automatically editing the design procedure document. In particular, the present invention relates to a process and apparatus for generating a design procedure document which can be easily understood by converting CAD data into the design procedure document by using CAD knowledge codes and editing the design procedure document so that the relation between groups is understood, when design is conducted by using a knowledge-base CAD.

Furthermore, the present invention also relates to a process and apparatus for generating a design procedure document in which when design is conducted by using a knowledge-base CAD, the CAD data is converted into a design procedure document by using CAD knowledge codes, specific elements which are important in the design steps of the design procedure document are automatically extracted; each of the extracted elements and a CAD image corresponding thereto are automatically displayed in order to make it easy to understand the design procedure document.

### 2. Description of Related Art

Recently many efforts have been made to achieve an efficient and high level operation by using a knowledge-base system. A knowledge-base system which is a design support system in which knowledge and know-how which is possessed by designers is held as digital information to make the design working more efficient, so that semi-automatic design is achieved has been developed (refer to JP-A-Hei 11-296566). In case in which such a knowledge-base system is utilized, conversion of the knowledge of a text written in a natural language into knowledge codes has been in dependently conducted in each knowledge-base system.

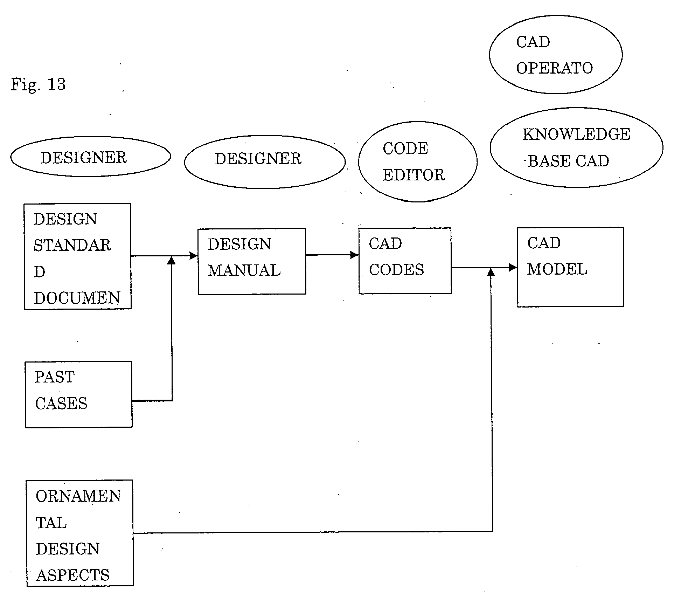

When a product is designed in a prior art design working, a design standard document which specifies required specifications for a product and ornamental design aspects which are ornamental design required specifications are determined at an initial stage of the designing as shown in Fig. 13. In order to meet these requirements, a designer prepares a design procedure document describing the dimension and shape of the product and its determining process, which is written in a natural language with reference to the drawings of similar products which were designed in past. Finally, a CAD operator prepares a CAD model of the product and prepares the design procedure document as CAD data by applying the design document to the design aspects on CAD.

The design procedure document which is a design document explicitly describes as a document, design rules and design process which are necessary to meet required specifications which are described in the design standard document. Since the design procedure document gives appropriate instructions to the CAD operators and is used so that the knowledge on the design rules and design process are commonly shared and used among designers, the design procedure document is written in a natural language. Conversion of the text of the design rules and design process into CAD knowledge codes enables the CAD model making work to be conducted under support of knowledge-base modeling function of the knowledge base CAD.

The design procedure document is changed from CAD data to a design procedure document which is written in a natural language if the CAD model is required to be verified by a supervisor of the designer or a third party. It is necessary to convert the design procedure document into a design procedure document written in a natural language in case the CAD data is revised for changes in design and is used for education of inexperienced designers. The information on the design procedure document which has been converted into CAD knowledge codes is difficult to be used and maintained by a third party if the information remains unchanged. Confirmation and verification, update and retrieval of the input design knowledge is necessary to maintain and check the design rules and design process. It is necessary to make the design procedure document so that it is easily understood by a third party since it is commonly used by a number of designers as a design standard. Therefore, reconversion of CAD knowledge codes into a natural language has been conducted. This reconversion method is disclosed in JP-A-2003-305667 (U.S. patent application serial No. 10/716,557) which was filed by present inventors.

However, the design procedure document usually comprises an enormous number of elements. Even if the contents of the design procedure document are written in a natural language, it takes an extended period of time to understand the contents thereof. The description order is not necessarily uniformed by the designers. It may be tedious and hard for a third party to understand the design procedure document for studying it.

The design procedure document comprises an enormous number of elements. Even if the contents of the enormous design procedure document are written in a natural language, it takes an extended period of time to understand the contents. Association of each of the elements of the design procedure document with its CAD image may make it easier to visually grasp and understand the concept of the design procedure document. Association of all elements with their CAD images provides problems in that the number of CAD images becomes excessively larger and the amount of data becomes larger and it takes an extended period of time to access to the data.

### SUMMARY OF THE INVENTION

It is an object of the present invention to provide a process and apparatus for generating a design procedure document in which the design procedure document written in a natural language is arranged so that it can be easily understood and used.

It is another object of the present invention to provide a process and apparatus for generating a design procedure document in which specific elements which are necessary to understand the design procedure document are automatically extracted from the elements of the design procedure document written in a natural language; and each of the extracted elements is displayed together with a CAD image corresponding thereto, so that the design procedure document can be easily used.

According to a first aspect of the invention, the CAD design procedure document is prepared by automatically converting CAD data into the design procedure document written in a natural language by means of a converter, each element includes a name of group to which the element belongs and its preparing step, specific elements of the design procedure document are extracted, the elements are displayed together with the groups and their preparing steps. Accordingly, the design procedure document is automatically prepared from CAD data. A group to which each element of the design procedure document belongs is explicitly represented and the content of the preparing step is also explicitly represented. Necessary elements are extracted and rearranged for representation so that they are easily understood.

According to a second aspect of the invention, since knowledge codes which are input into a knowledge-base CAD are converted into a design procedure document via an intermediate representation codes, they can be converted irrespective of the kind of the knowledge-base CAD. The contents of the CAD knowledge codes can be confirmed with the design procedure document which is written in a natural language. The contents of initial design procedure document can be confirmed. The CAD modeling can be verified. Also at an update of the design procedure document, original design procedure document can be revised wile confirming it, so that it is convenient. Since the CAD knowledge codes can be quickly converted into the design procedure document written in a natural language, the design procedure document is easy and convenient to understand when it is used as design information by a third party or used for education of inexperienced designers.

Since the design procedure document comprises elements which are written in a natural language, each element including a name of group to which the element belongs and its preparing step, and being displayed, the design procedure document can be automatically prepared from the CAD data. For each element of the design procedure document, the group to which the element belongs is explicitly represented and its preparing step is also explicitly represented. Necessary elements are extracted and rearranged and displayed so that they are easy to understand.

It is preferable that the elements of the specific belonging groups which are necessary to be considered are automatically extracted from the design procedure document. The extracted respective elements, the groups to which the elements belong and their preparing steps are represented in a list together. Only the elements which belong to groups which are necessary to be considered can be extracted. Only the design steps of the groups can be noted, so that they are easy to be considered.

It is preferable that an element of a specific belonging group which is necessary for analysis is automatically extracted from the design procedure document, variables used in the preparing step of the element are automatically extracted, the name of an element which matches the variable in the element of the design procedure document which belongs to a group other than the specific group is extracted and displayed as an input element. Therefore, the elements of the groups other than specific groups which are necessary to prepare elements which belong to specific groups to be noted can be extracted. The groups which are to be prepared prior to specific groups to be noted can be ascertained. The elements to be referenced can be quickly recognized.

It is preferable that an element of a specific belonging group is automatically extracted from the design procedure document, and if the extracted element is used in the preparing step of an element which belongs to a group other than the specific belonging group, the element of the specific belonging group is extracted and displayed as an output element. Therefore, the elements which are referenced by other groups can be recognized among specific groups. Determination which elements of the specific groups are important can be made. Determination which elements are to be considered can be easily made.

It is preferable that an element in which an equation is set forth in the preparing step of said design procedure document is extracted; an element in which its parameter is set forth in the preparing step of said design procedure document is extracted; a variable used in said preparing step of the element of said specific belonging group is automatically extracted; the name of the element in which said variable matches the name of the element having an equation set forth in said preparing step, its belonging group and the preparing step are extracted together. Therefore, the elements related with an equation which is necessary in the preparing step of the elements of specific belonging group can be immediately understood.

A variable is extracted from the preparing step of the element having an equation set forth in the extracted preparing step, the element in which its element name having a parameter set forth in the preparing step of the design procedure document matches the variable is extracted the name of the element having a parameter set forth in the preparing step of the design procedure document, its belonging group and preparing step are extracted. Therefore, the parameter used in an equation which is necessary in the preparing step of the elements of the specific belonging group can be understood at the same time, so that factors which are necessary to prepare the elements of specific belonging group can be understood.

Furthermore, variables are extracted from the preparing step of the parameter. An element having an element name matching the extracted parameter can be extracted and displayed. In this case, the parameter which is necessary to prepare the parameter can be understood at the same time.

It is preferable that the elements of specific belonging groups are extracted from the design procedure document and they are arranged and displayed in an ascending or descending order. Therefore, if the elements are displayed in an ascending order, the design steps can be viewed from the beginning, so that understanding of them is easy.

If the elements are displayed in a descending order, the object of the design step in the group can be firstly understood since the last prepared element is set forth at the beginning of the list. This makes the understanding of the design steps faster. It is possible to understand and to review how the elements are prepared in a reverse order.

It is more preferable that the variables in preparing steps of said elements which are displayed as said output elements are extracted, all of said variables are compared with the element name of said specific belonging group, and matched element name and said preparing step are displayed. Therefore, a process (preparing steps) for preparing the elements of specific belonging groups, which are referenced by other groups, that is the elements which are important can be understood.

It is preferable that elements of specific belonging groups are automatically extracted from the design procedure document; the elements of the extracted elements, which are named by a designer on preparation of a drawing are extracted. Since the element which is named by the designer is usually a specific and important element in the design procedure document, this important element can be easily extracted. The variables in the preparing steps of the extracted elements are extracted; all of the extracted variables are compared with the element names of the specific belonging groups; and the element names which match the extracted variables and the preparing steps are displayed. A method of preparing important elements can be easily understood

If the variable in the preparing step of the extracted and named element exists in the element of the specific belonging group, the element and the preparing step are displayed. This makes it easy to understand the step for preparing the named element.

According to a third aspect of the invention, the CAD design procedure document is prepared by automatically converting CAD data into the design procedure document written in a natural language in a design procedure document preparing apparatus which converts CAD data into a design procedure document written in a natural language for preparing the design procedure document. Each element includes a name of group to which the element belongs and its preparing step, specific elements of the design procedure document are extracted. The elements are displayed together with the groups and their preparing steps. Accordingly, the design procedure document can be automatically prepared from CAD data by means of the CAD design procedure document automatic preparing apparatus. A group to which each element of the design procedure document belongs is explicitly represented and the content of the preparing step is also explicitly represented. Necessary elements are extracted and rearranged for representation so that they are easily understood.

According to a fourth aspect of the invention, since knowledge codes which are input into a knowledge-base CAD are converted into a design procedure document via an intermediate representation codes, they can be converted irrespective of the kind of the knowledge-base CAD. The contents of the CAD knowledge codes can be confirmed with the design procedure document which is written in a natural language. The contents of initial design procedure document can be confirmed. The CAD modeling can be verified. Also at an update of the design procedure document, original design procedure document can be revised wile confirming it, so that it is convenient. Since the CAD knowledge codes can be quickly converted into the design procedure document written in a natural language, the design procedure document is easy and convenient to understand when it is used as design information by a third party or used for education of inexperienced designers.

Since the design procedure document comprises elements which are written in a natural language, each element including a name of group to which the element belongs and its preparing step, and being displayed, the design procedure document can be automatically prepared from the CAD data. For each element of the design procedure document, the group to which the element belongs is explicitly represented and its preparing step is also explicitly represented. Necessary elements are extracted and rearranged and displayed so that they are easy to understand.

It is preferable that the elements of the specific belonging groups are automatically extracted from the design procedure document by the CAD design procedure document automatic preparing apparatus. The extracted respective elements, the groups to which the elements belong and their preparing steps are represented in a list together. Only the elements which belong to groups which are necessary to be considered can be extracted. Only the design steps of the groups can be noted, so that they are easy to be considered.

It is preferable that an element of a specific belonging group which is necessary for analysis is automatically extracted from the design procedure document by the CAD design procedure document automatic preparing apparatus , variables used in the preparing step of the element are automatically extracted, the name of an element which matches the variable in the element of the design procedure document which belongs to a group other than the specific group is extracted and displayed as an input element. Therefore, the elements of the groups other than specific groups which are necessary to prepare elements which belong to specific groups to be noted can be extracted. The groups which are to be prepared prior to specific groups to be noted can be ascertained. The elements to be referenced can be quickly recognized.

It is preferable that an element of a specific belonging group is automatically extracted from the design procedure document, if the extracted element is used in the preparing step of an element which belongs to a group other than the specific belonging group, the element of the specific belonging group is extracted and is displayed as an output element. Therefore, the elements which are referenced by other groups can be recognized among specific groups. Determination which elements of the specific groups are important can be made. Determination which elements are to be considered can be easily made.

It is preferable that an element in which an equation is set forth in the preparing step of the design procedure document; an element in which its parameter is set forth in the preparing step of the design procedure document is extracted; a variable used in the preparing step of the element of the specific belonging group is automatically extracted; the name of the element in which the variable matches the name of the element having an equation set forth in the preparing step, its belonging group and the preparing step are extracted together. Therefore, the elements related with an equation which Is necessary in the preparing step of the elements of specific belonging group can be immediately understood.

' A variable is extracted from the preparing step of the element having an equation set forth in the extracted preparing step, the element in which its element name having a parameter set forth in the preparing step of the design procedure document matches the variable is extracted the name of the element having a parameter set forth in the preparing step of the design procedure document, its belonging group and preparing step are extracted. Therefore, the parameter used in an equation which is necessary in the preparing step of the elements of the specific belonging group can be understood at the same time, so that factors which are necessary to prepare the elements of specific belonging group.

Furthermore, variables are extracted from the preparing step of the parameter. An element having an element name matching the extracted parameter can be extracted and displayed. In this case, the parameter which is necessary to prepare the parameter can be understood at the same time.

It is preferable that elements of specific belonging groups are extracted from the design procedure document and they are arranged and displayed in an ascending or descending order by the CAD design procedure document automatic preparing apparatus. Therefore, if the elements are displayed in an ascending order, the design steps can be viewed from the beginning, so that understanding of them is easy.

If the elements are displayed in a descending order, the object of the design step in the group can be firstly understood since the last prepared element is set forth at the beginning of the list. This makes the understanding of the design steps faster. It is possible to understand and to review how the elements are prepared in a reverse order.

It is more preferable that steps of the elements which are displayed as the output elements are extracted, all of the variables are compared with the element name of the specific belonging group, and matched element name and the preparing step are displayed by the CAD design procedure document preparing apparatus. Therefore, a process (preparing steps) for preparing the elements of specific belonging groups, which are referenced by other groups, that is the elements which are important can be understood.

It is preferable that elements of specific belonging groups are automatically extracted from the design procedure document; the elements of the extracted elements, which are named by a designer on preparation of a drawing are extracted. Since the element which is named by a designer is usually is a specific and important element in the design procedure document, this important element can be easily extracted. The variables in the preparing steps of the extracted elements are extracted; all of the extracted variables are compared with the element names of the specific belonging groups; and the element names which match the extracted variables and the preparing steps are displayed. A apparatus of preparing important elements can be easily understood

If the variable in the preparing step of the extracted and named element exists in the element of the specific belonging group, the element and the preparing step are displayed. This makes it easy to understand the step for preparing the named element.

According to a fifth aspect of the invention, the design procedure document comprises elements which are written in a natural language, a preparing step is written for each element, a specific element of the design procedure document is automatically extracted; and a CAD image corresponding to the extracted element is displayed. Therefore, the design procedure document is automatically prepared from CAD data and specific important elements which are necessary to understand the preparing step, of the elements of the design procedure document can be automatically extracted. CAD images corresponding to the process steps of the elements can be displayed together with the element. Hence, the preparing process can be visually understood and the design procedure document can be easily understood.

According to a sixth aspect of the invention, since knowledge codes which are input into a knowledge-base CAD is converted into a design procedure document via an intermediate representation codes, they can be converted irrespective of the kind of the knowledge-base CAD. The contents of the CAD knowledge codes can be confirmed with the design procedure document which is written in a natural language. The contents of initial design procedure document can be confirmed. The CAD modeling can be verified. Also at an update of the design procedure document, original design procedure document can be revised wile confirming it, so that it is convenient. Since the CAD knowledge codes can be quickly converted into the design procedure document written in a natural language, the design procedure document is easy and convenient to understand when it is used as design information by a third party or used for education of inexperienced designers.

The design procedure document comprises elements which are written in a natural language, a preparing step is written for each element, a specific element of the design procedure document is automatically extracted; and a CAD image corresponding to the extracted element is displayed. Therefore, important elements which are necessary to understand the preparing steps of the elements of the design procedure document can be automatically extracted and CAD images corresponding to the preparing steps of the elements can be displayed together with the elements. The preparing process can be visually understood and the design procedure document can be easily understood.

It is preferable that the automatic extraction of the specific element of the design procedure document identifies sequential design steps and extracts an element to display a CAD image for each group of the sequential design steps. When design is conducted by using CAD, part of the CAD which performs specific functions may often conduct a process from the preparation of the element which is used as a reference to the preparation of the element which performs its function in a sequential manner. Therefore, the elements of the sequential design steps are identified to ascertain the elements which constitute a group of design steps. A CAD image corresponding to the last element which is determined as the element which performs its function is displayed together with the last element. Viewing the CAD image at the stage of the design step of the grouped elements makes it easy to understand the design step.

It is preferable that the automatic extraction of the specific element of the design procedure document extracts a sketch element to prepare a sketch from the preparing step of the element of the design procedure document and displays a CAD image corresponding to the element having the sketch element. Sketch steps are often used for preparing two-dimensional sectional shape in CAD design. The two-dimensional sectional shape is often used as a reference to prepare a three-dimensional structure. Therefore, the sketch element is often an first working which may be recognized as a group so that it is important. Hence, displaying the sketch element and its CAD image allows the contents of the design procedure document to be understood.

It is preferable that the automatic extraction of the specific element of the design procedure document extracts an element, the name of which is named by a designer or CAD operator from the elements of the design procedure document and displays a CAD image corresponding to the named element. The named element and a CAD image corresponding to the named element are displayed. The element which is named by a designer or a CAD operator is usually an element which is specific and important in the design procedure document and a last element of a grouped work. Displaying of the element of the grouped work together with its CAD image makes it easy to understand the element and the grouped work.

It is preferable that the automatic extraction of the specific element of the design procedure document extracts an element which uses the element of other CAD data from the elements of the design procedure document and displays a CAD image corresponding to the extracted element. The element which is prepared by using the element of other CAD data is often a start element in design. Recognition of the CAD image which is a start point makes it easy to understand design work.

It is preferable that the automatic extraction of the specific element of the design procedure document extracts an element which is used in the preparing step of the element belonging to a plurality of belonging groups from the elements of the design procedure document displays a CAD image corresponding to the extracted element. The element which is used in the step of preparing the elements belonging to a plurality of group is often related with the relation between parts and restriction conditions common to parts. Recognition of the CAD image of this element makes it easy to understand the relation between a plurality of parts.

It is preferable that the automatic extraction of the specific element of the design procedure document extracts an element which is used in the preparing steps of three or more elements from the elements of the design procedure document and displays a CAD image corresponding to the extracted element. The element which is used in the step for preparing more than two elements is important. Recognition of the CAD image of this element makes it easy to understand the relation between a plurality of parts.

It is preferable that the automatic extraction of the specific element of the design procedure document extracts a series of element groups which achieve the same task appearing in a plurality of positions or a series of preliminarily registered element groups from the design procedure document and displays a CAD image corresponding to the last element of the extracted element groups. Understanding of a series of element groups as a grouped work makes it quick and easy to understand the meaning of the work of the series of element groups. Recognition of the CAD image corresponding to the last element of the element group makes it easy to grasp the structure of the design procedure document.

It is preferable that a CAD image of an element which is associated with the CAD image corresponding to the specific element is displayed together therewith. A CAD image which is necessary to prepare a specific element can be displayed at the same time. The preparing step can be understood and the content of the element to be noted can be easily understood.

It is preferable that the elements are automatically extracted and rearranged together with their preparing steps for display, a specific element is extracted from the extracted and rearranged elements and a CAD image corresponding to the extracted element is displayed. Accordingly, the elements are rearranged to make understanding of them easy. As CAD image for every step which is grouped by the rearrangement or corresponding to the important element is displayed, so that understanding of the design procedure document is easy.

A term "rearrange or rearrangement" used herein includes rearrangement of the order of the elements which are described as well as omitting an intermediate operation by extracting specific elements of the design procedure document and rearranging the order of elements to make the understanding of whole of the design procedure document easy.

It is preferable that the displayed design procedure document and CAD image are displayed in EXCEL or HTML format. If they are displayed in EXCEL format, they are easily used by designers since they are popularly used in CAD design. If they are displayed in HTML format, they are easily used via the network, so that use of them between remote sites is easy.

According to a seventh aspect of the invention, the design procedure document comprises elements which are written in a natural language, a preparing step is written for each element, a specific element of the design procedure document is automatically extracted; and a CAD image corresponding to the extracted element is displayed by the CAD design procedure document automatic preparing apparatus. Therefore, the design procedure document is automatically prepared from CAD data and specific important elements which are necessary to understand the preparing step, of the elements of the design procedure document can be automatically extracted. CAD images corresponding to the process steps of the elements can be displayed together with the element. Hence, the preparing process can be visually understood and the design procedure documentary can be easily understood.

According to an eighth aspect of the invention, since knowledge codes which are input into a knowledge-base CAD is converted into a design procedure document via an intermediate representation codes by the CAD design procedure document automatic preparing apparatus, they can be converted irrespective of the kind of the knowledge-base CAD. The contents of the CAD knowledge codes can be confirmed with the design procedure document which is written in a natural language. The contents of initial design procedure document can be confirmed. The CAD modeling can be verified. Also at an update of the design procedure document, original design procedure document can be revised wile confirming it, so that it is convenient. Since the CAD knowledge codes can be quickly converted into the design procedure document written in a natural language, the design procedure document is easy and convenient to understand when it is used as design information by a third party or used for education of inexperienced designers.

The design procedure document comprises elements which are written in a natural language, a preparing step is written for each element, a specific element of the design procedure document is automatically extracted; and a CAD image corresponding to the extracted element is displayed. Therefore, important elements which are necessary to understand the preparing steps of the elements of the design procedure document can be automatically extracted and CAD images corresponding to the preparing steps of the elements can be displayed together with the elements. The preparing process can be visually understood and the design procedure document can be easily understood.

It is preferable that the automatic extraction of the specific element of the design procedure document identifies sequential design steps and extracts an element to display a CAD image for each group of the sequential design steps. When design is conducted by using CAD, part of the CAD which performs specific functions may often conduct a process from the preparation of the element which is used as a reference to the preparation of the element which performs its function in a sequential manner. Therefore, the elements of the sequential design steps are identified to ascertain the elements which constitute a group of design steps. A CAD image corresponding to the last element which is determined as the element which performs its function is displayed together with the last element. Viewing the CAD image at the stage of the design step of the grouped elements makes it easy to understand the design step.

It is preferable that the automatic extraction of the specific element of the design procedure document extracts a sketch element to prepare a sketch from the preparing step of the element of the design procedure document and displays a CAD image corresponding to the element having the sketch element. Sketch steps are often used for preparing two-dimensional sectional shape in CAD design. The two-dimensional sectional shape is often used as a reference to prepare a three-dimensional structure. Therefore, the sketch element is often an first working which may be recognized as a group so that it is important. Hence, displaying the sketch element and its CAD image allows the contents of the design procedure document to be understood.

It is preferable that the automatic extraction of the specific element of the design procedure document extracts an element, the name of which is named by a designer or CAD operator from the elements of the design procedure document and displays a CAD image corresponding to the named element. The named element and a CAD image corresponding to the named element are displayed. The element which is named by a designer or a CAD operator is usually an element which is specific and important in the design procedure document and a last element of a grouped work. Displaying of the element of the grouped work together with its CAD image makes it easy to understand the element and the grouped work.

It is preferable that the automatic extraction of the specific element of the design procedure document extracts an element which uses the element of other CAD data from the elements of the design procedure document and displays a CAD image corresponding to the extracted element. The element which is prepared by using the element of other CAD data is often a start element in design. Recognition of the CAD image which is a start point makes it easy to understand design work.

It is preferable that the automatic extraction of the specific element of the design procedure document extracts an element which is used in the preparing step of the element belonging to a plurality of belonging groups from the elements of the design procedure document displays a CAD image corresponding to the extracted element. The element which is used in the step of preparing the elements belonging to a plurality of group is often related with the relation between parts and restriction conditions common to parts. Recognition of the CAD image of this element makes it easy to understand the relation between a plurality of parts.

It is preferable that the automatic extraction of the specific element of the design procedure document extracts an element which is used in the preparing steps of three or more elements from the elements of the design procedure document and displays a CAD image corresponding to the extracted element. The element which is used in the step for preparing more than two elements is important. Recognition of the CAD image of this element makes it easy to understand the relation between a plurality of parts.

It is preferable that the automatic extraction of the specific element of the design procedure document extracts a series of element groups which achieve the same task appearing in a plurality of positions or a series of preliminarily registered element groups from the design procedure document and displays a CAD image corresponding to the last element of the extracted element groups. Understanding of a series of element groups as a grouped work makes it quick and easy to understand the meaning of the work of the series of element groups. Recognition of the CAD image corresponding to the last element of the element group makes it easy to grasp the structure of the design procedure document.

It is preferable that a CAD image of an element which is associated with the CAD image corresponding to the specific element is displayed together therewith. A CAD image which is necessary to prepare a specific element can be displayed at the same time. The preparing step can be understood and the content of the element to be noted can be easily understood.

It is preferable that the elements are automatically extracted and rearranged together with their preparing steps for display, a specific element is extracted from the extracted and rearranged elements and a CAD image corresponding to the extracted element is displayed. Accordingly, the elements are rearranged to make understanding of them easy. As CAD image for every step which is grouped by the rearrangement or corresponding to the important element is displayed, so that understanding of the design procedure document is easy.

It is preferable that the displayed design procedure document and CAD image are displayed in EXCEL or HTML format. If they are displayed in EXCEL format, they are easily used by designers since they are popularly used in CAD design. If they are displayed in HTML format, they are easily used via the network, so that use of them between remote sites is easy.

### BRIEF DESCRIPTION OF THE DRAWINGS

Fig. 1 is a flow chart showing the basic flow for converting knowledge codes into a design procedure document in the present invention;
Fig. 2 is a view showing a process for designing a cone by a CAD in the present invention;
Fig. 3 is a flow chart showing the whole of a process for arranging and rearranging the design procedure document in the present invention;
Fig. 4 is a flow chart showing a process for extracting elements in a given group in the present invention;
Fig. 5 is a flow chart showing a process for extracting an input element in the present invention;
Fig. 6 is a flow chart showing a process for extracting an output element in the present invention;
Fig. 7(a) is a first part of a flow chart showing a process for extracting equations and parameters in the present invention;
Fig. 7(b) is a second part of a flow chart showing a process for extracting equations and parameters in the present invention;
Fig. 8 is a flow chart showing a process for outputting elements belonging to a given group in an ascending order in the present invention;
Fig. 9 is a flow chart showing a process for outputting elements belonging to a given group in a descending order;
Fig. 10 is a flow chart showing a process for outputting a method of preparing an output element in the present invention;
Fig. 11 is a flow chart showing a process for outputting a method of preparing a named element in the present invention;
Fig. 12 is a flow chart showing a process for rearranging and outputting elements which belong to a given group in the present invention;
Fig. 13 is a flow chart showing a flow for converting a design procedure document into a CAD model;
Fig. 14 is a view showing an embodiment of the present invention of a pipe which is designed by CAD;
Fig. 15 is a flow chart showing the whole of a process for identifying a design procedure document and for obtaining a CAD image in the present invention;
Fig. 16 is a flow chart showing a process for identifying sequential steps of a design procedure document and for selecting elements to obtaining a CAD image in the present invention;

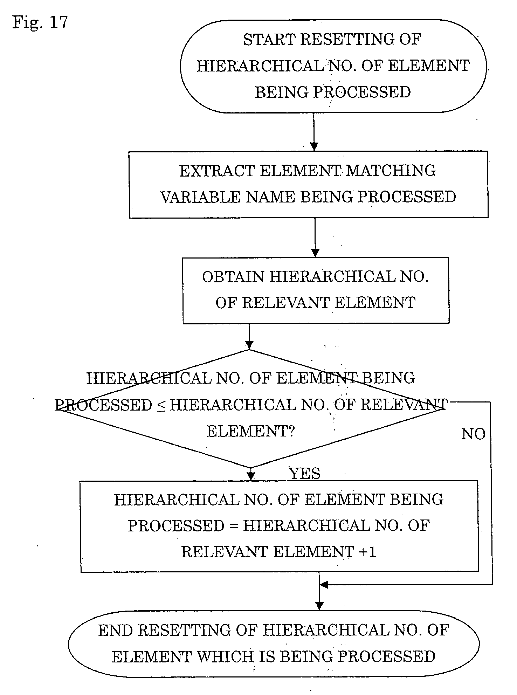

Fig. 17 is a flow chart showing a process for identifying sequential steps of a design procedure document and for setting a hierarchical number for the element of the design procedure document in the present invention;
Fig. 18 is a flow chart for showing a process for identifying the sketch steps and for selecting the elements to obtain a CAD image in the present invention;
Fig. 19 is a flow chart showing a process for identifying naming steps of the design procedure document and for selecting elements to obtain a CAD image in the present invention;
Fig. 20 is a flow chart showing a process for changing the display state of the elements of the design procedure document of the present invention;
Fig. 21 is a view showing a CAD image corresponding to an element "line. 1" of the design procedure document;
Fig. 22 is a view showing a CAD image corresponding to an element "corner. 1" of the design procedure document of the present invention;
Fig. 23 is a view showing a CAD image corresponding to an element "sketch. 1" of the design procedure document of the present invention;
Fig. 24 is a flow chart showing a process for outputting a design procedure document and a CAD image corresponding to an element of the design procedure document in the present invention;
Fig. 25 is a view which outputs a design procedure document and a CAD image corresponding to the element of the design procedure document in the present invention;
Fig. 26 is a flow chart showing the whole of a process for arranging and rearranging the elements of the design procedure document of the present invention;
Fig. 27 is a view showing another embodiment of the present invention in which a slanted surface is designed by CAD;
Fig. 28 is a flow chart showing a process for identifying elements which use other CAD elements in the design procedure document of the present invention;
Fig. 29 is a flow chart showing a process for identifying the elements which are used for a plurality of groups in the design procedure document of the present invention;
Fig. 30 is a flow chart showing a process for identifying multiple reference elements in the design procedure document of the present invention;
Fig. 31 is a flow chart showing a process for identifying the elements which match in pattern in the design procedure document of the present invention;

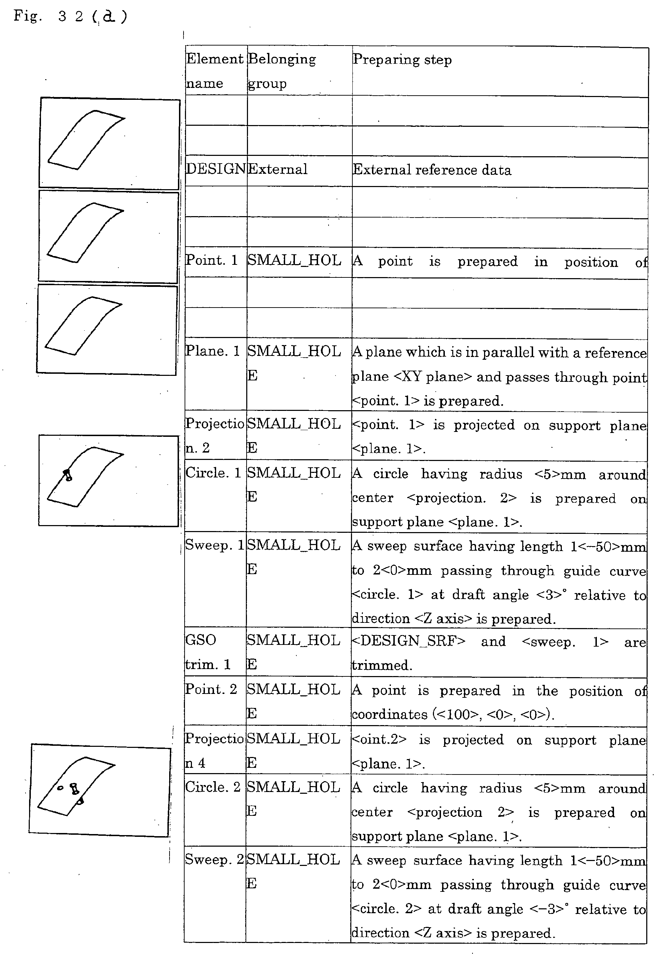

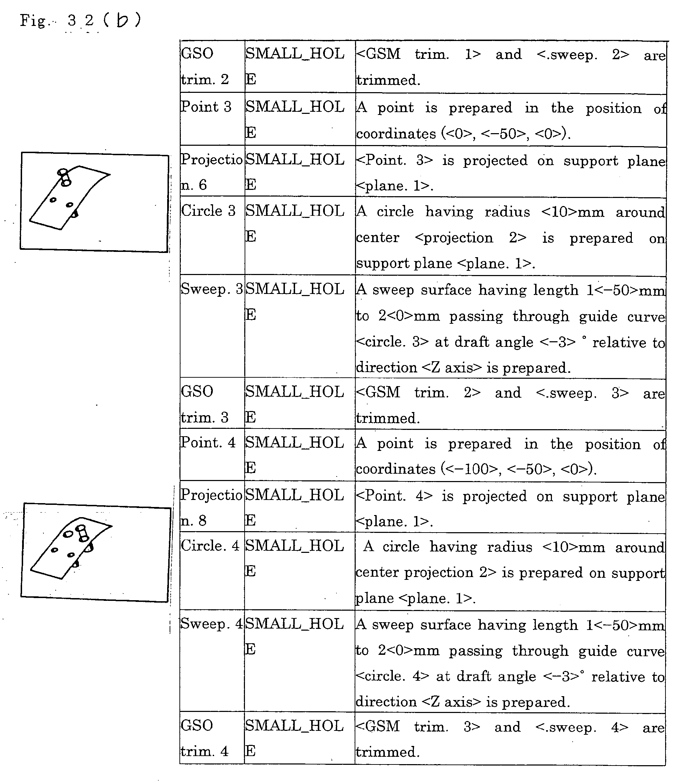

Fig. 32(a) is a first part of a view showing CAD images corresponding to the elements of the design procedure document in the other embodiment of the present invention; and
Fig. 32(b) is a second part of a view showing CAD images corresponding to the elements of the design procedure document in the other embodiment of the present invention.

### DETAILED DESCRIPTION OF THE PREFERRED EMBODIMENTS

An embodiment of the present invention will be described with reference to the drawings. Although the present invention relates to a process and system for preparing a design procedure document which is commonly used in a knowledge-base CAD such as CAT1A, PRO/E, etc., the invention will be described by way of CAT1A.

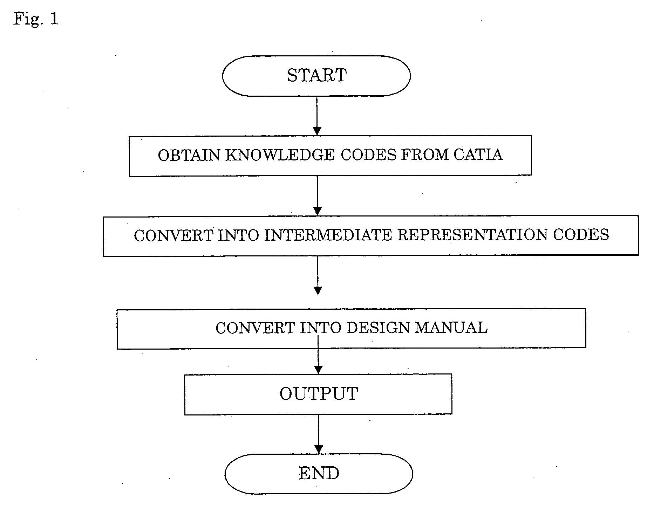

Fig. 1 is a flow chart showing a basic flow for knowledge codes used in CAT1A into a design procedure document which is written in a natural language via intermediate representation codes in accordance with the present invention.

Firstly, the knowledge codes which are related with the design procedure document of CATIA are output to a knowledge code converting apparatus having a CATIA-knowledge code converting system. The knowledge codes which have been input to the knowledge code converting apparatus are converted into intermediate representation codes in a representation format which does not depend upon the knowledge-base system relating to specified object area to be used, that is which may be commonly used among knowledge-base systems by using a text description support system. Then, the intermediate representation codes are converted into a design procedure document written in a natural language so that it may be used for confirmation, update or education for designers.

A process for converting the CAD knowledge codes into the design procedure document via the intermediate representation codes is as follows: Firstly, the knowledge codes are output from the knowledge-base CAD (CATIA). In this case, the CAD knowledge codes may be different depending upon the knowledge-base CAD. The output CAD knowledge coeds are converted into intermediate representation codes by means of an intermediate representation code converting apparatus. The intermediate representation codes are converted into the design procedure document by a document description generating apparatus. Thus, the design procedure document which has been input various kinds of knowledge-base CAD as CAD knowledge codes can be output as a document which is written in a natural language.

The design procedure document will be described by way of the design of a cone which is a simple shape. Table 1 shows a design procedure document used for designing the cone, which has been converted into a natural language from CAD knowledge codes. The design procedure document comprises elements, each representating individual one step of the design process. In the Table, one element, a group to which the element belongs to and the content of the step are set forth in one row.

**[Table 1]**

| Element Name | Belonging Group | Preparing Step |
|---|---|---|
| Profile | | A set of shapes is prepared. |
| Conical surface | | A set of shapes is prepared. |
| Final shape | | A set of shapes is prepared. |
| Point. 1 | Profile | A point is prepared in position of coordinates (<30>, <30>, <0>). |
| Radius | Parameter | A parameter of length is prepared. Its value is made <30>mm. |
| Equation. 1 | Relation | An equation <Y coordinate of point. 2> = <'radius'> is prepared. |
| Point. 2 | Profile | A point is prepared in position of coordinates (<0>, <equation. 1>, <0>). |
| Line. 1 | Profile | A line from a point <point. 1> to a point <point. 2> is prepared. |
| Height | Parameter | A parameter of length is prepared. Its value is made <50>mm. |
| Equation. 2 | Relation | An equation <Z coordinate of point. 3> = <'height'> is prepared. |
| Point. 3 | Profile | A point is prepared in a position defined by coordinates (<0>, <0>, <equation 2>). |
| Line 2 | Profile | A line from a point <point. 2> to a point <point. 3> is prepared. |
| Conical Section | Profile | <Line. 1> is jointed to <line. 2>. |
| Rotation axis | Conical Surface | A line from a point <point. 1> to a point <point. 3> is prepared. |
| Ending Angle | Parameter | A parameter of angle is prepared. Its value is made <270>°. |
| Equation. 3 | Relation | An equation <angle 1 of cone> = <'Ending angle'> is prepared. |
| Starting Angle | Parameter | A parameter of angle is prepared. Its value is made <30>°. |
| Equation. 4 | Relation | An equation <angle 2 of cone> = <'Starting angle'> is prepared. |
| Cone | Conical Surface | A surface is prepared by rotating the profile <conical surface> around a rotation axis <rotation axis>. Starting and Ending angles are made <equation. 3>° and <equation. 4>°, respectively. |
| Plane. 1 | Final Shape | A plane which is offset from a reference plane <XY plane> by a distance <20>mm is prepared. |
| Division. 1 | Final Shape | <Cone> is divided by <plane. 1>. |

Since the elements are only set forth in an order which is described by the designer in this design procedure document, it takes an extended period of time to utilize the manual. Since the manual is described as it is in an order which the designer describes, it is tedious and convenient to understand the design procedure document having an enormous number of elements.

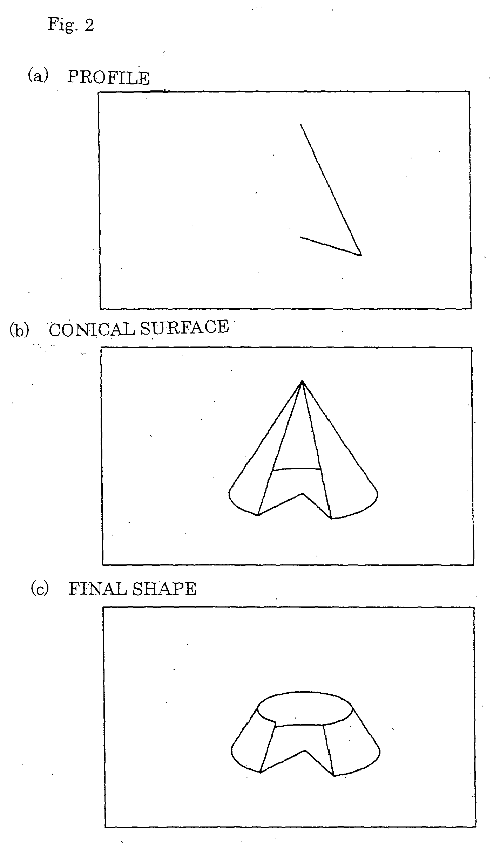

Fig. 2 shows a preparing feature of each group when a truncated cone is prepared in accordance with the design procedure document. Fig. 2(a) shows a phase at which a profile for preparing the conical surface is prepared. Fig. 2(b) shows a phase at which a conical surface is prepared by rotating the profile. Fig. 2(c) shows a truncated cone which is prepared by dividing the conical surface by a given plane.

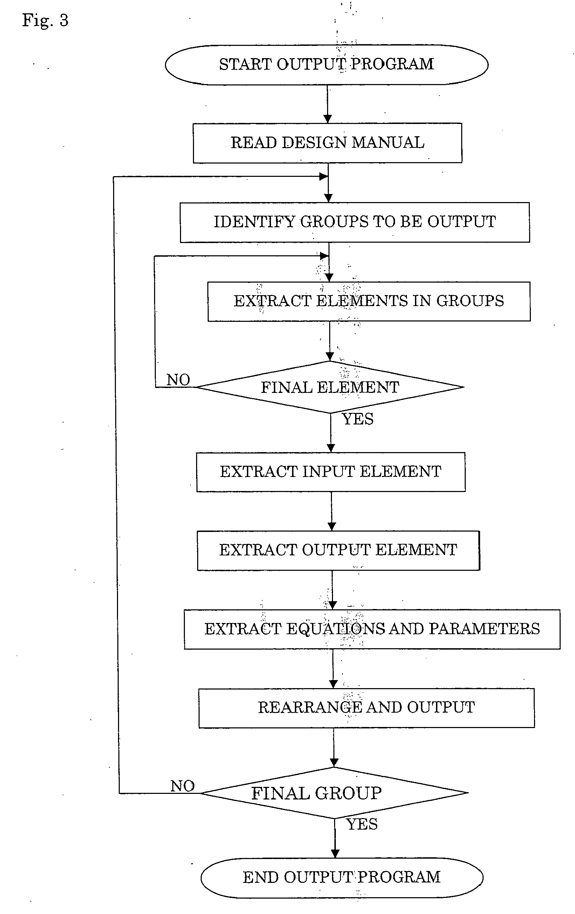

A whole flow of a process to arrange the design procedure document is illustrated in Fig. 3. Firstly, the design procedure document is read into an apparatus for automatically preparing the design procedure document. Groups of the elements of the design procedure document which are essential are determined. The determined groups are made those to be output. The elements of relevant groups are extracted from the description of the group entry. Thereafter, input and output elements of the group are retrieved for extraction until final elements. The equations and parameters of the elements which are set forth in the manual are extracted. The extracted elements are rearranged in a descending or ascending order for output. Then, a way of preparing elements which is referred as to "output element preparing method" is also output.

Editing of the design procedure document in such a manner makes the relative relation between the points and elements more clear and easier to understand the design procedure document.

Each step for extracting the elements of the above-mentioned group will now be described in detail.

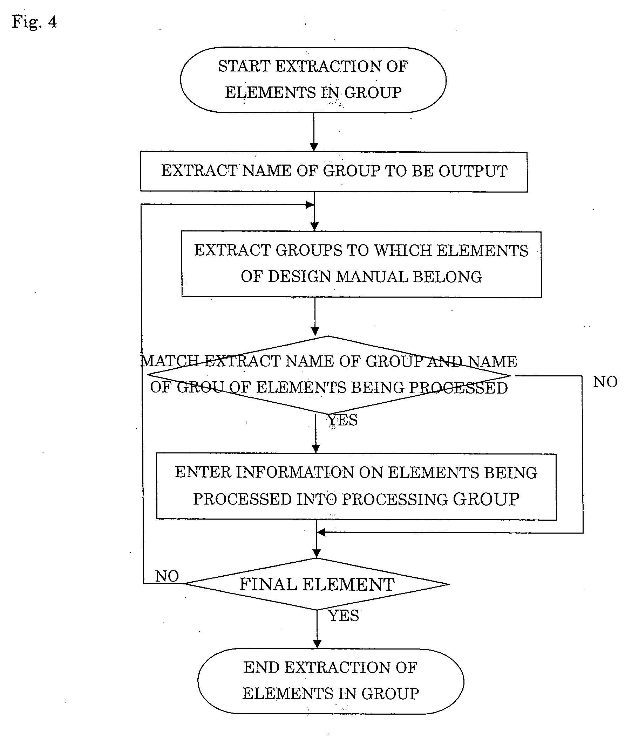

Fig. 4 shows a flow to extract elements which belong to a specified group, for example, elements belonging to a group which is a conical surface. Table 2 shows the list of the extracted elements which belong to a group "conical surface" based upon the flow.

**[Table 2]**

| Elements of group "conical surface" | | |
|---|---|---|
| Element Name | Belonging Group | Preparing Step |
| Rotation axis | Conical Surface | A line from a point <point. 1> to a point <point. 3> is prepared. |
| Cone | Conical Surface | A surface is prepared by rotating the profile <conical section> around the rotation axis <rotation axis>. Starting and ending angles are made <equation. 3>° and <equation. 4>°, respectively. |

Since, for example, the conical surface is an important shape to design the truncated cone, a group "conical surface" is selected. An element in which its group name is "conical surface" is extracted from the groups of the design procedure document. The extracted element and the name of the group to which the element belongs and preparing step are entered into entries of Table 2 "elements of group conical surface. The group to which the element belongs in the design procedure document is retrieved to determine whether there is an element "conical surface" in the group. If there is the element, it is entered in Table 2. Retrieval is continued to the final element.

A look-up table (Table 2) can be prepared by extracting an element which belongs to the group "conical surface", the name of the group to which the element belongs and a preparing step in such a manner. Accordingly, only elements which belong to a necessary group to be noted can be extracted. Only the elements of the group and its design step can be ascertained and easily considered.

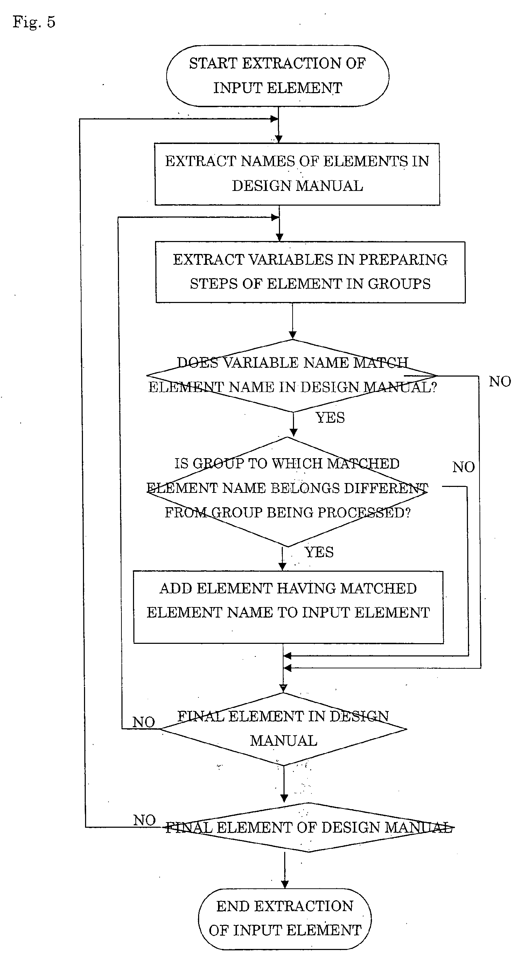

Now, extraction of input element will be described with reference to Fig. 5.

Firstly, all element names in the design procedure document are extracted. Thereafter, each variable at the preparing step of the element of the extracted group "conical surface" is extracted. A term "variable" used herein refers to data which is set forth in < > of the preparing step and may be specified by a designer. The variable is geometrical concept such as point or line. For example, the variable which is set forth in the preparing step of the element which is named "rotation axis" is <point. 1>, <point. 3>. Retrieval is conducted whether the variable <point. 1> is in the name of the element which is extracted from the design procedure document. If there is the variable, it is extracted. The extracted element, the name of group to which the element belongs and the description in the entry of the preparing step are set forth in the other table 3 which is referred to as input element. Further, retrieval is conducted in the design procedure document whether there is same <point. 1>. If there is the same parameter, it is set forth in the Table 3. Retrieval is conducted until final element.

Thereafter, the elements in the design procedure document is retrieved to determine whether there is <point. 3>. Then, retrieval is similarly conducted as to variable in the preparing step of the element named "cone" of the group "conical surface". The variable in the element "cone" is <conical section> and <rotation axis>. Since <rotation axis> of the variables exists as the element of the group "conical surface", it is not entered into the Table "input element". The reason resides in that the elements of the groups other than the group "conical surface" are extracted from those used in the step of preparing the group "conical surface".

When retrieval of all items is completed in the step for preparing the elements "rotation axis" and "cone" which belong to the above mentioned group "conical surface", extraction is completed, so that Table 3 "Input element" can be automatically prepared.

**[Table 3]**

| INPUT ELEMENT | | |
|---|---|---|
| Element Name | Belonging Group | Preparing Step |
| Point. 1 | Profile | A point is prepared in a position defined by coordinates (<30>, <30>, <0>). |
| Point. 3 | Profile | A point is prepared in a position defined by coordinates (<0>, <0>, <equation. 2>). |
| Conical Section | Profile | <line. 1> is jointed to <line. 2>. |

Thus, the elements of the variables which are necessary to prepare the elements which belong to specified group to be noted, that is, the elements of the group "conical surface" can be extracted. In this case, the elements "point. 1", "point. 3" and "conical surface" can be extracted.

This makes it possible to ascertain the group which is to be prepared before the preparation of the elements "conical section" and "rotation axis". The relationship between the elements becomes more clear and it is possible to readily recognize the elements to be referenced.

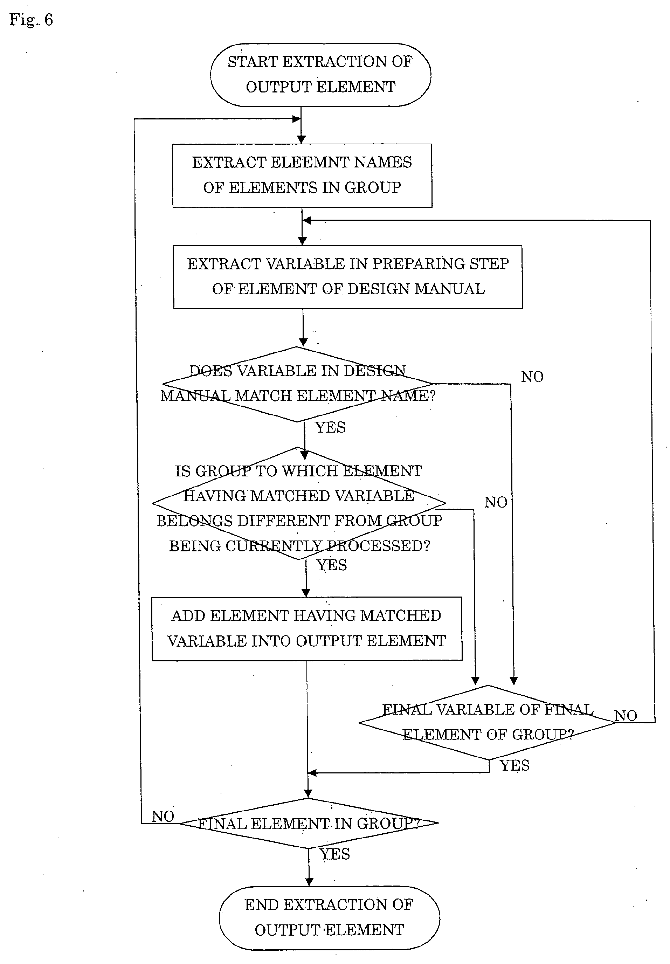

Now, extraction of the output elements will be described with reference to Fig. 6. The output element is extracted if the element which belongs to the foregoing extracted group "conical surface", that is the elements "conical section" and "rotation axis" are cited in the step for preparing the element belonging to the group other than the group "conical surface". The element which is cited at the step for the preparation of the other group can be recognized to be an element having a higher importance of he elements belonging to the extracted group.

Firstly, the name of the element belonging to the previously extracted group "conical surface" is extracted. In this case, the elements "rotation axis" and "cone" are extracted.

Retrieval of the rotation axis is conducted to determine whether there is any element name which matches "rotation axis" at the step for the preparation of the element in the design procedure document. "rotation axis" exists at the step of preparation of the element named "cone". However, since the element which is named "cone" is the element belonging to the previously extracted group" conical surface", it will not be extracted.

Then, retrieval of element name "cone" is conducted to determine whether there is any element name which matches "cone" in step of the element belonging to the other group of the design procedure document. The element name "cone" exists in element name "division 1". Since the element name "division 1" is not the element belonging to the previously extracted group "conical surface", the element name "cone" and the contents of the group to which the element belongs and the preparing step are entered into Table 4 which is a list of "output elements". In such a manner, retrieval of all elements which belong to the previously extracted group "conical surface" is conducted.

**[Table 4]**

| Output Elements | | |
|---|---|---|
| Element Name | Belonging Group | Preparing step |
| Cone | Conical Surface | A surface is prepared by rotating a profile <conical surface> around a rotation axis <rotation axis>. Starting and ending angles are made <equation. 3>° and <equation. 4>°, respectively. |

Therefore, an element to which other groups refer can be recognized from the group "conical surface". It is possible to ascertain which element in the group "conical surface" is important, so that it is possible to readily understand which element is to be considered.

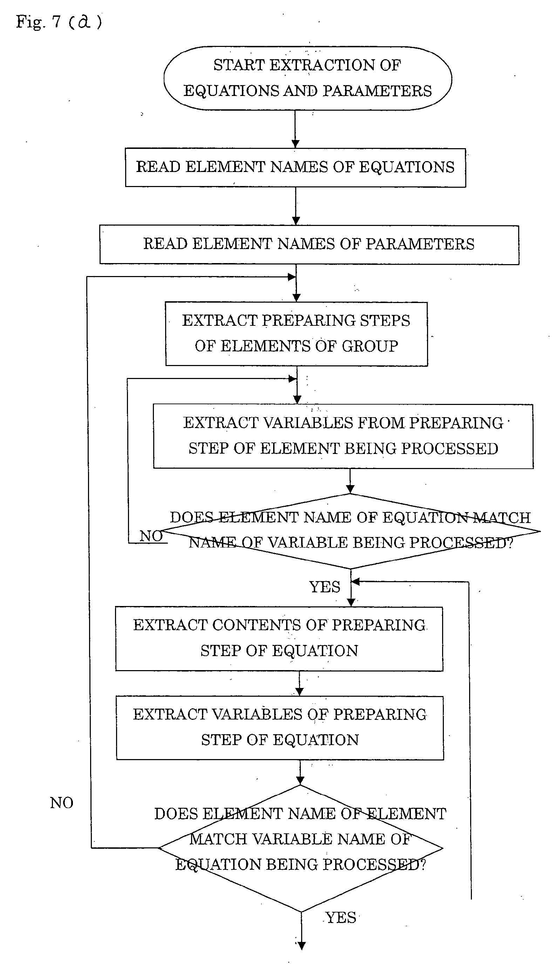

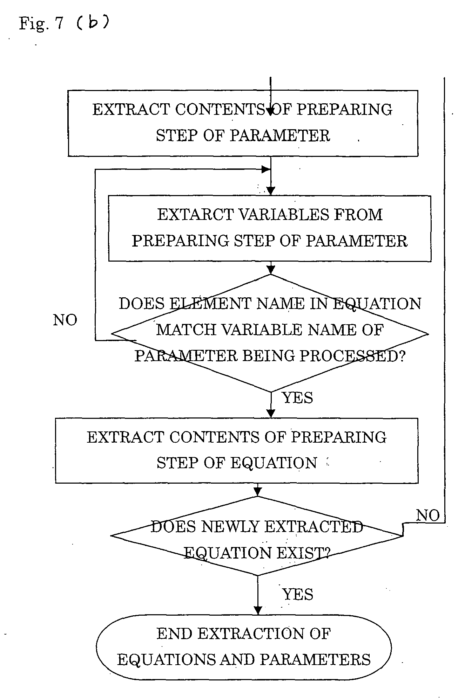

Now, equations and extraction of parameters will be described with reference to Fig. 7.

Belonging group "relation" in which an equation is set forth at preparing step of the design procedure document and element name which belongs to the group name "parameter" in which a parameter is set forth are read. The elements of the belonging group "relation" are shown in Table 5 "elements in group "relation""..

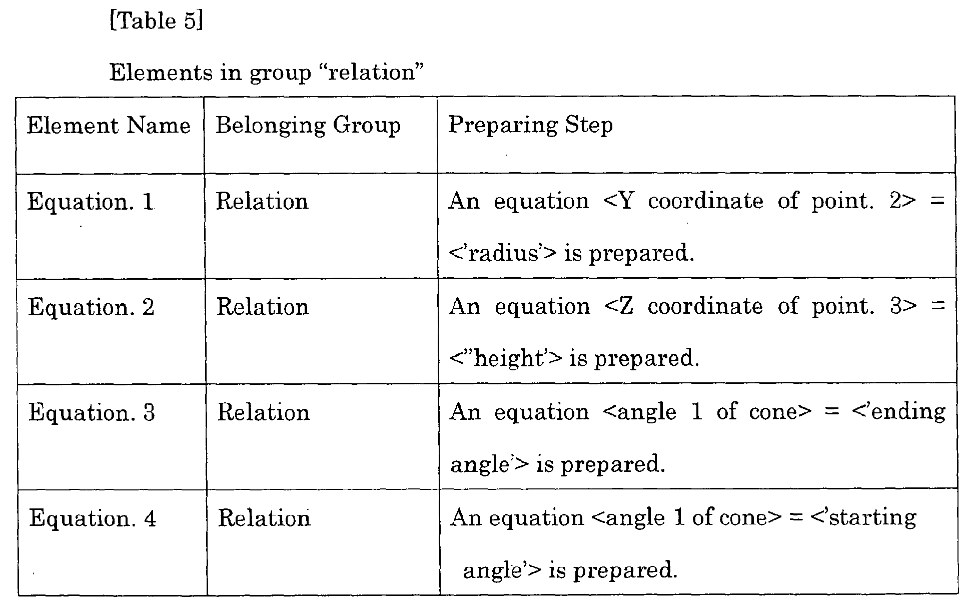

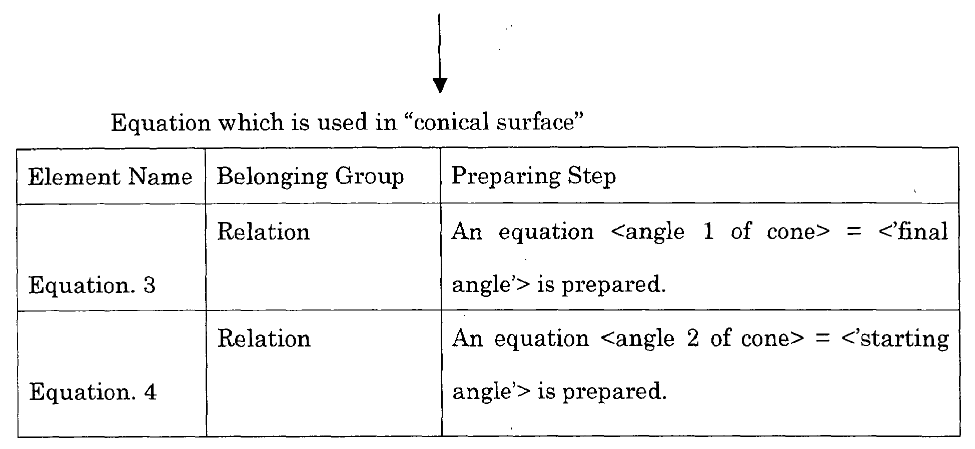

The element name is "Equation. 1" through "Equation. 4". The element of belonging group "parameter" has element names "radius", "height", "Ending angle", and "starting angle" as shown in the entry of element in the group "parameter" of Table 6.

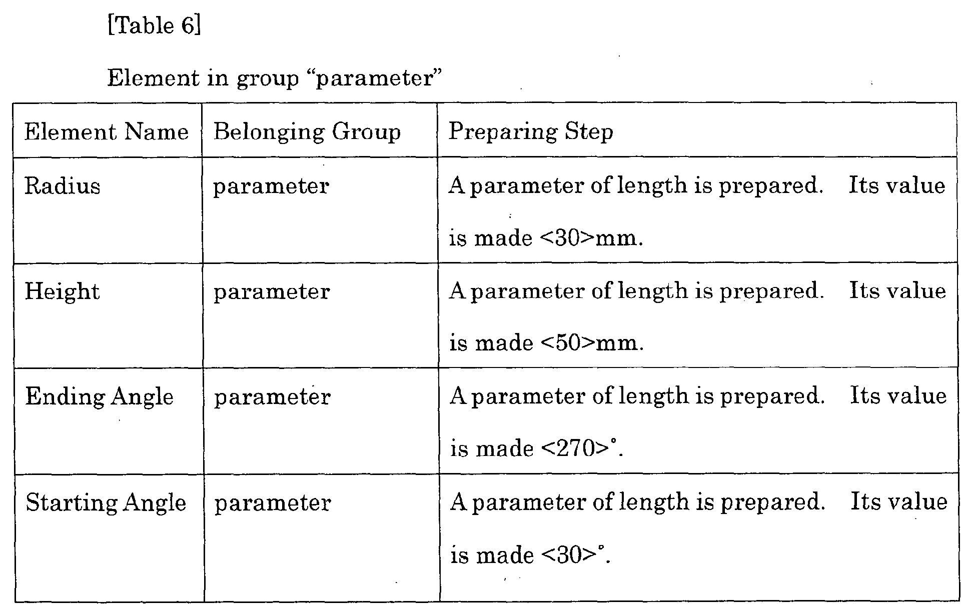

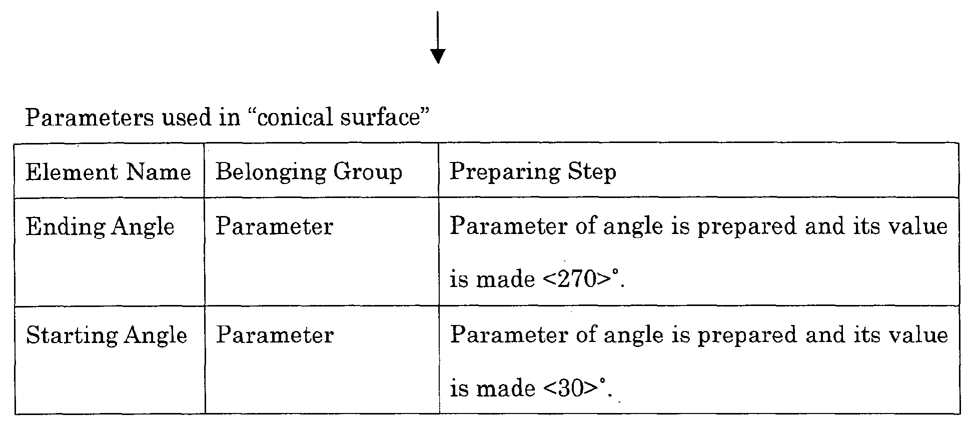

Thereafter, the preparing steps of elements belonging to the previously extracted group "conical surface" are extracted. Each variable is extracted from the extracted preparing step. If there is any of the variables of the preparing step of elements belonging to the group "conical surface", which matches the variable in the element name including an equation belonging to the group "relation" and the group "conical surface", the element name, belonging group and preparing step are set forth in the entry of parameter used in "conical surface". The element of the parameter used in "conical surface" is "Equation. 3" and "Equation. 4".

Now, the variables of the preparing step of the element names "Equation. 3" and "Equation. 4" are extracted and are compared with the element name belonging to the previously extracted group "parameter" of Table 6. If there is any variable which matches the element name, its element name, belonging group and preparing step are set forth in the entry of the parameter used in "conical surface". The elements of the parameters used in "conical surface" is "Ending angle" and "Starting angle". A result is set forth in the entry of "parameter used in "conical surface"" of Table 6.

Further, variables are extracted from the preparing step in which the extracted element names of Table 6 are "Ending angle" and "Starting angle". It is preferable to extract and describe any element which matches the extracted variable and the element names "Equation. 1" through "Equation. 4" in which the belonging group is "relation". In this case, it is possible to concurrently understand variables which are necessary to prepare parameters "Ending angle" and "Starting angle". Therefore, it is easy to prepare the elements having equations.

Thus, it is possible to clearly and positively recognize the equations used by specified belonging group and to prevent the confusion with the equations used by other groups. Understanding of the design procedure document is easy. It is also possible to clearly and positively recognize the parameters used by the other specific group. It is possible to concurrently understand the equations and the parameters. Prevention of confusion between the parameters and those used by other group can be achieved. It is easy to understand the design procedure document.

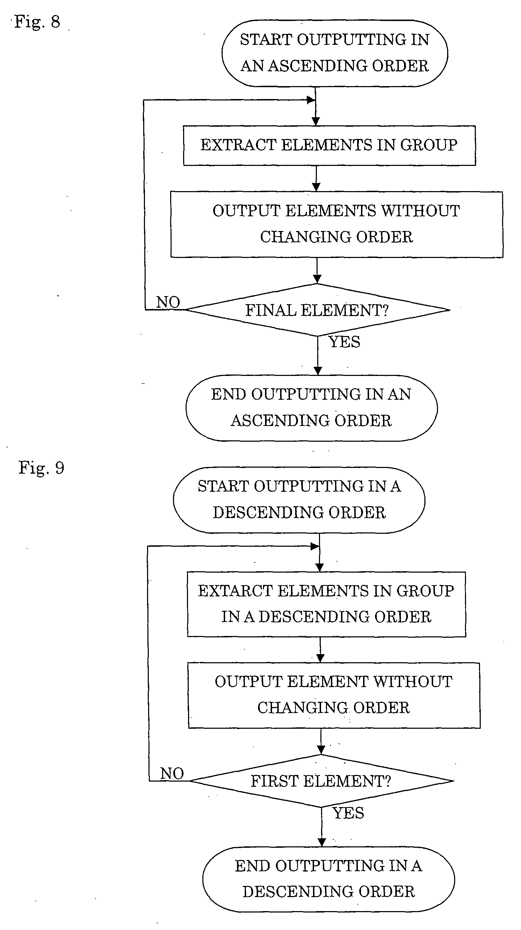

Now, a method of rearranging the design procedure document in an ascending order and outputting it will be described with reference to Fig. 8.

The elements belonging to the specific group of the design procedure document will be output in an ascending order. For example, in a element belonging to the previously extracted group "conical surface", "rotation axis" and "cone" of the element name will be extracted as shown in Fig. 7.

The contents of the group to which the rotation axis and the cone belong and the preparing step are set forth in the respective entries of the list.

If the elements are set forth in an ascending order, it is easy to understand the design procedure document since the design steps in group can be viewed in an order from the beginning.

**[Table 7]**

| Ascending Order | | |
|---|---|---|
| Element Name | Belonging Group | Preparing Step |
| Rotation axis | Conical surface | A line from point <point. 1> to point <point. 3> is prepared. |
| Cone | Conical surface | A surface is prepared by rotating a profile <conical surface> around a rotation axis <rotation axis>. Starting and ending angles are made <Equation. 3>° and <Equation. 4>°, respectively. |

Now, a method of rearranging the design procedure document in a descending order will be described with reference to Fig. 9.

The elements belonging to a specific group of the design procedure document will be extracted in a descending order. For example, in an element belonging to the extracted group "conical surface", "rotation axis" and "cone" of the element name are extracted as shown in Fig. 8. The contents of the groups to which the rotation axis and cone belong and the preparing step are set forth in the entries of the list.

**[Table 8]**

| Descending Order | | |
|---|---|---|
| Element Name | Belonging Group | Preparing Step |
| Cone | Conical surface | A line from point <point. 1> to point <point. 3> is prepared. |
| Rotation axis | Conical surface | A surface is prepared by rotating a profile <conical surface> around a rotation axis <rotation axis>. Starting and ending angles are made <Equation. 3>° and <Equation. 4>°, respectively. |

Since the last prepared element is set forth firstly in case of description in a descending order, the purpose of the design step in the group can be firstly understood, so that understanding of the design step becomes fast. It is possible to understand and consider how the elements are prepared in reverse chorological order.

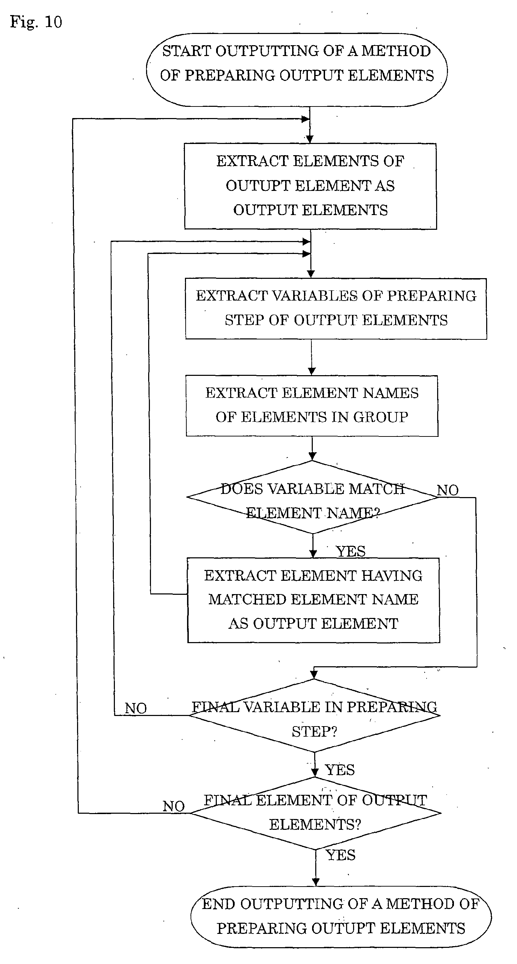

Now, a method of outputting an output element preparing approach will be described with reference to Fig. 10.

The list of output element which is related with the elements of the previously extracted group "conical surface" is set forth in Table 4. If there is any element which is the same as the variable of the preparing step of its output elements exists in the element in the previously extracted group "conical surface" of Table 2, its element is extracted and set forth in list (Table 9) "an approach to prepare output elements". The reason why the element to be extracted is limited to the elements of the previously extracted same group is that setting forth of all elements becomes complicate, so that it takes longer time to understand the design procedure document, resulting in a loss of efficiency.

**[Table 9]**

| An approach to prepare output elements | | |
|---|---|---|
| Element Name | Belonging group | Preparing step |
| Cone | Conical surface | A surface is prepared by rotating a profile <conical section> around a rotation axis <rotation axis>. Starting and Ending angles are made <Equation. 3>° and <Equation. 4>°, respectively. |
| Rotation Axis | Conical Surface | A line from point <point. 1> to point <point. 3> is prepared. |

Therefore, it is possible to understand the elements which are referenced by the other groups, of those of the above mentioned specific belonging group, that is the elements which are very important.

Specifically, the element "cone" was previously extracted as an output element as shown in Table 4. <conical section> and <rotation axis> are extracted as the variables in the preparing step of the element "cone". The "conical section" and "rotation axis" are compared with the previously extracted element of the group "conical surface". The elements of the group "conical surface" are "rotation axis" and "cone". The conical section and rotation axis are extracted as variables.

Accordingly, the element of the group "conical surface" which is necessary to prepare the output element "cone" is "rotation axis" as shown in Table 9.

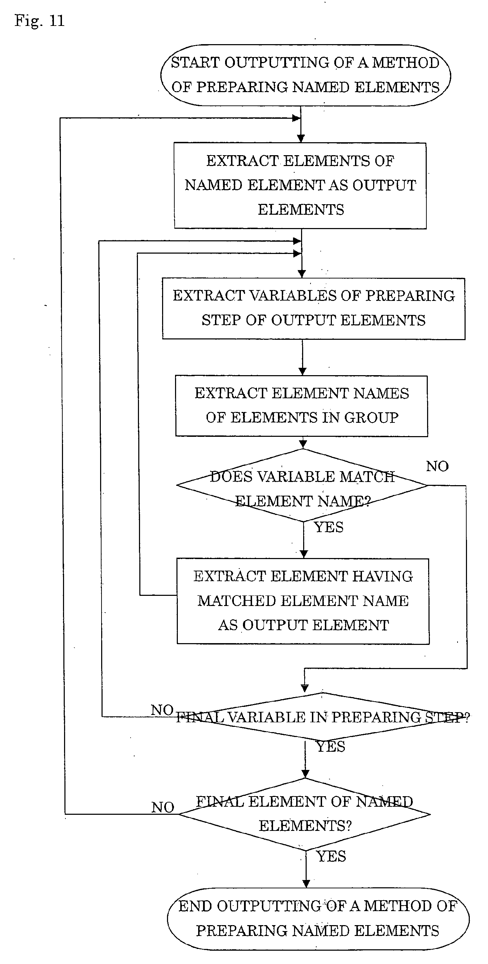

Now, an approach to output a method of preparing the named element will be described with reference to Fig. 11.

Each element which was named on preparation of CAD data is extracted as an output element by a designer or CAD operator. Each variable of the preparing step of the output element is extracted.

The element name of the previously extracted group "conical surface" is extracted and an element in which the above-mentioned variable matches the element name is extracted. The extracted element is set forth in a list "a method of preparing named elements" (Table 10). The contents of the group to which the element belongs and the preparing step are also set forth in the list.

**[Table 10]**

| Method of preparing named elements | | |
|---|---|---|
| Element Name | Belonging group | Preparing step |
| Rotation Axis | Conical Surface | A line from point <point. 1> to point <point. 3> is prepared. |
| | | |
| Cone | Conical surface | A surface is prepared by rotating a profile <conical section> around a rotation axis <rotation axis>. Starting and Ending angles are made <Equation. 3>° and <Equation. 4>°, respectively. |
| Rotation Axis | Conical Surface | A line from point <point. 1> to point <point. 3> is prepared. |

The variables in the preparing step of the extracted elements are extracted. Since all the variables are compared with the element names of the specific belonging group and matched element names and the preparing step are entered, a method of preparing the elements which are highly important can be readily understood.

Specifically, the present invention will be described with reference to Fig. 11 and Table 10. "Rotation axis" and "cone" are extracted as the elements named on preparation of CAD data by a designer or CAD operator. The element name, belonging group and preparation step of "rotation axis" and "cone" are entered in the list of "method of preparing named elements" of Table 10. Then, the variables in the preparing step of "rotation axis" are extracted. In this case, the variables are <point. 1> and <point. 3>. Since these variables <point. 1> and <point. 3> do not match "rotation axis" and "cone", they will not be entered into the list of method of preparing named elements.

Then, the variables in the preparing step of the element "cone" are extracted. In this case, the variables are <conical section> and <rotation axis>. The variable <conical section> does not match the rotation axis and cone which are elements of the group <conical surface>, but the variable <rotation axis> matches the rotation axis and cone which are elements of the group <conical surface>. Thus, the element <rotation axis>, its belonging group name and the preparing step are entered into the list of a method of preparing a core which is the element of the above-mentioned group <conical surface>.

The element which is named by the designer is generally specific and highly important in the design procedure document, so that the highly important element can be easily extracted.

The variables in the preparing step of the elements "cone" and "conical surface" are extracted. All of the variables are compared with the element names of the specific belonging group. Since the matched element name "rotation axis" and its preparing step are entered into the list, the method of preparing highly important element can be easily understood.

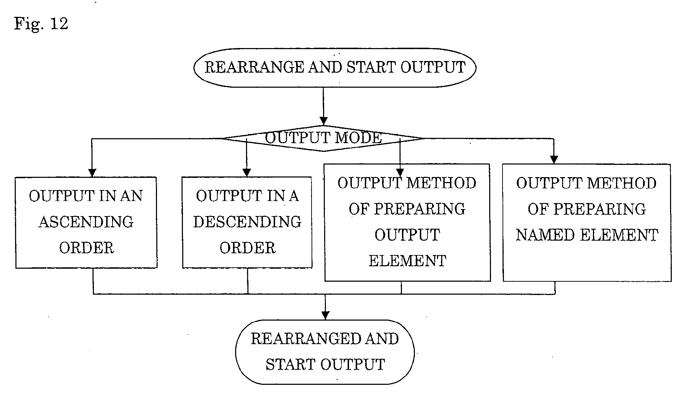

A method of rearranging and outputting the design procedure document in such a manner is shown in Fig. 12. The elements in which the belonging group is conical surface can be arranged and output in an ascending and descending order in connection with the method of preparing the output element and the method of preparing named element. Alternatively, they can be arranged and output in connection with the input element, output element, preparation element, equation and parameter.

Examples of the lists of the output elements are shown in Tables 7 through 11. Table 11 is a look-up table showing the elements which are related with the elements belonging to the group "conical surface".

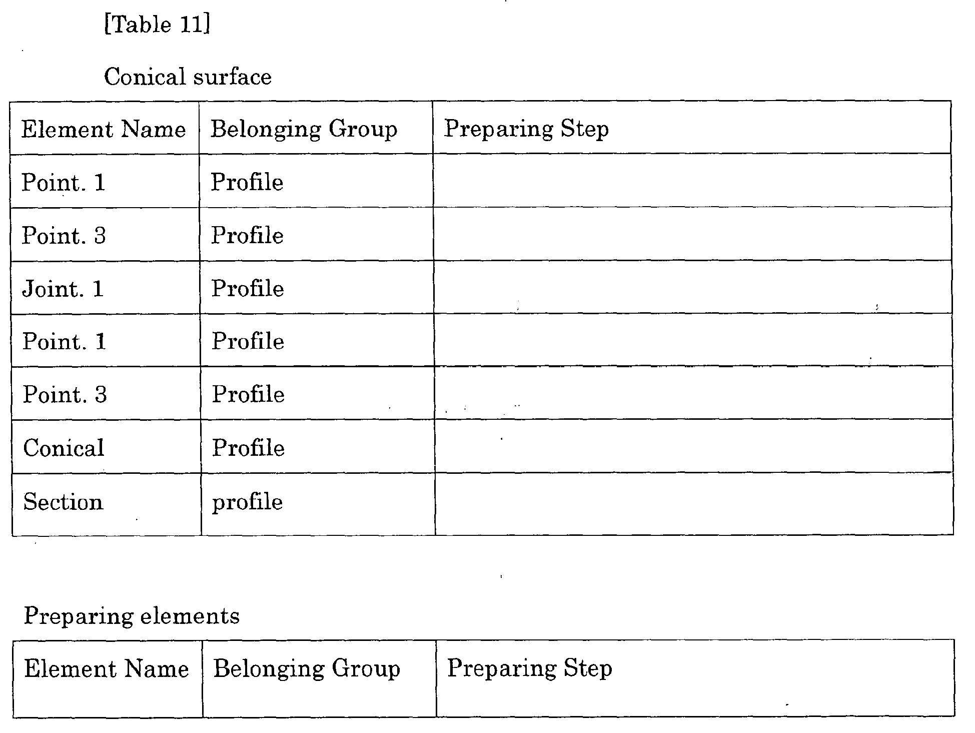

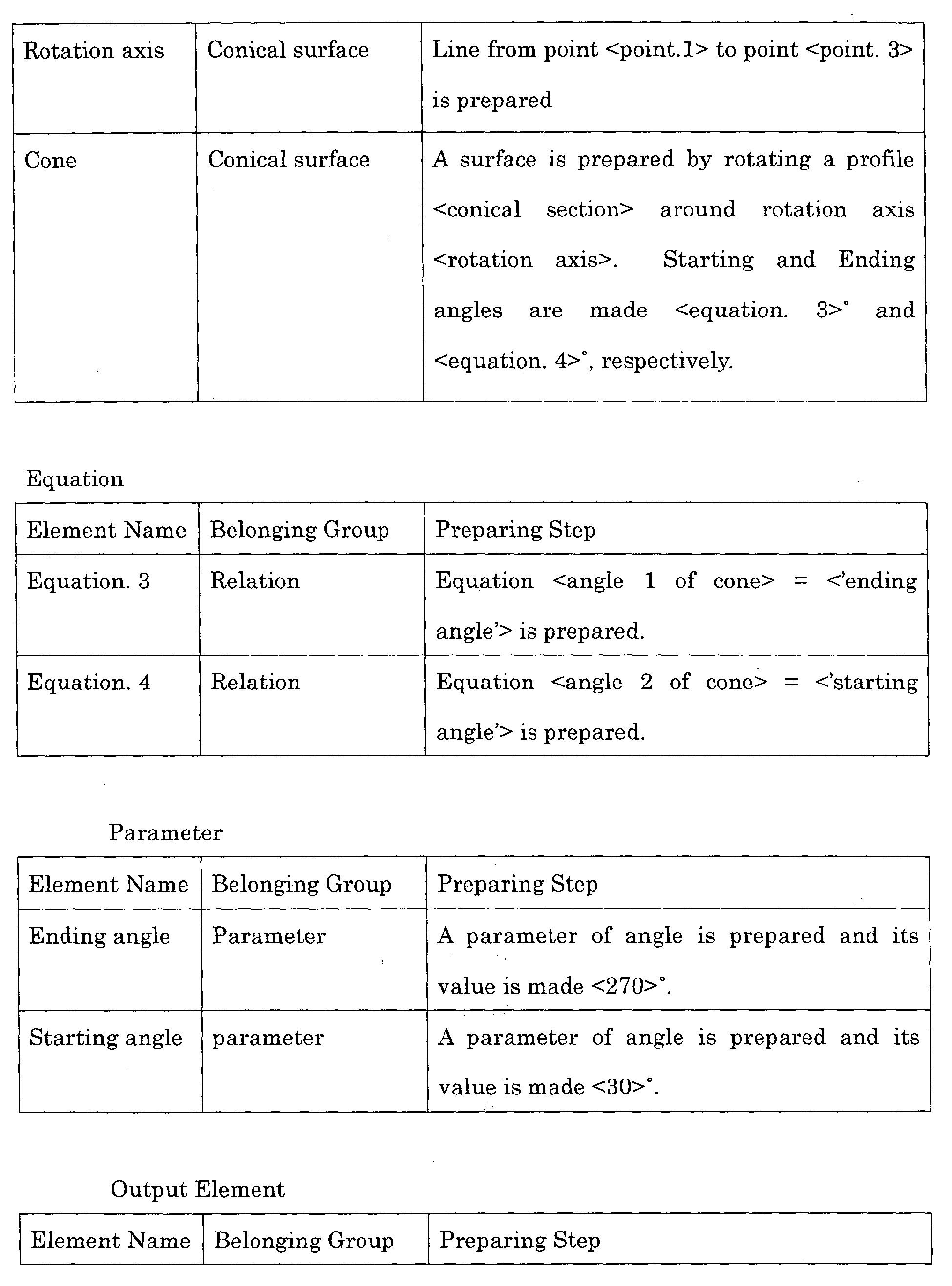

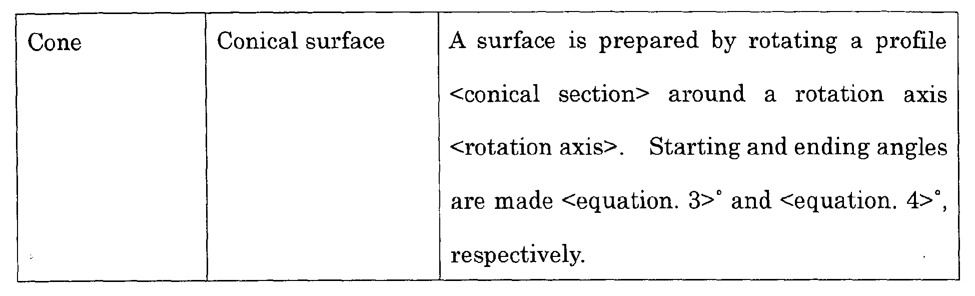

Therefore, the related elements can be represented by focusing on a part to be noted among enormous preparing steps. It is easy to understand the design procedure document and is ready to consider it. Understanding of CAD data which are prepared by other person is also easy.

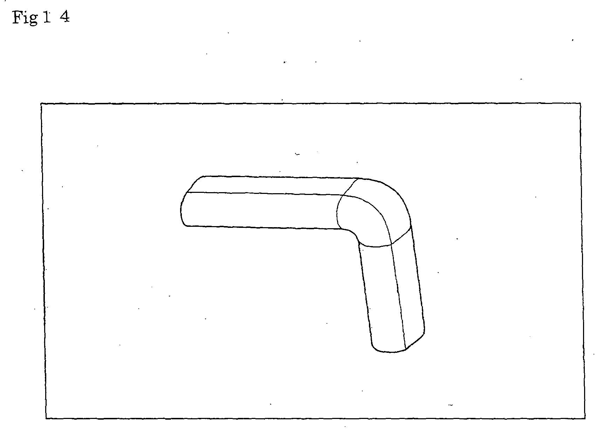

Now, this design procedure document will be described by way of the designing of a pipe which is bent at right angles, and which is a simple shape. Table 12 shows a design procedure document used for designing the pipe, which is converted into a natural language from CAD knowledge codes. The design procedure document comprises rows, each comprising an element representing individual step. a group to which the element belongs and a preparing step for the element. Fig. 14 is a perspective view showing a pipe 50 which is designed in accordance with the design procedure document of Table 12.

**[Table 12]**

| Element Name | Belonging Group | Preparing Step |
|---|---|---|
| Point. 1 | Shapeset. 1 | A point is prepared in a position of coordinates (<0>, <20>, <0>). |
| Line. 1 | Shape set. 1 | A line having direction <Z-axis>, and starting and ending points which are positioned <0>mm and <25>mm from point <point. 1>, respectively, is prepared. |
| Point. 2 | Shape set. 1 | A point is prepared in a position of coordinates (<0>, <0>, <15>). |
| Line. 2 | Shape set. 1 | A line having direction <Y axis>, starting and ending points positioned <0>mm and <25>mm from point <point. 2> is prepared. |
| Corner. 1 | Shape set. 1 | A corner having radius <3>mm is prepared between <line. 2> and <line. 1>. |
| Sketch | Shape set. 1 | Sketch is prepared. |
| Pipe | Shape set. 1 | A surface is prepared by sweeping profile <sketch. 1> along guide curve <corner. 1>. |

Since this design procedure document has elements which are only set forth in an order that the designer describes and the image of Fig. 14 shows a final shape when the design is completed, it takes an extended period of time to understand the process of the design and the above-mentioned use of the design procedure document is inconvenient.

The design procedure document has a enormous number of elements since the shape to be designed is usually not simple shape, but complicated shape. Only reading of the elements from such a design procedure document having an enormous number of elements makes it tedious and inconvenient to understand the design procedure document. Accordingly, the present invention displays a CAD image corresponding to the element at every important break point of the element.

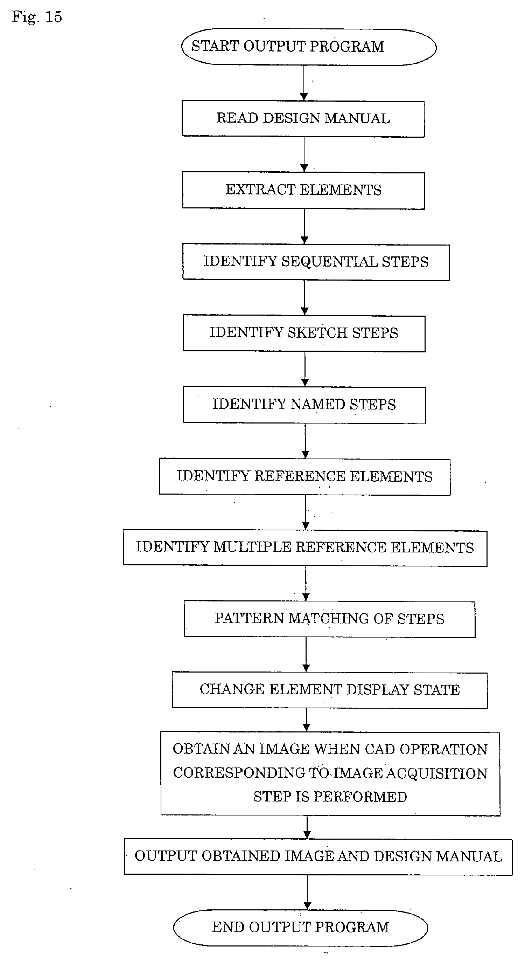

A process of the whole flow to extract elements in which CAD images are read from the design procedure document for display is shown in Fig. 15.

The design procedure document is firstly read into the design procedure document automatic preparing apparatus. Then all elements of the design procedure document are extracted. Thereafter, the elements are designated with hierarchical numbers to identify which preparing steps of the elements are sequential. If the step is sequential, the last sequential element is added with a mark (image acquisition flag) for extracting the CAD image.

Then, all elements of the design procedure document are retrieved to identify whether there is any element containing a sketch step at the preparing step. If there is an element, the element is designated with a mark (image acquisition flag) to extract the CAD image.

All elements of the design procedure document are retrieved to identify whether there is any element named by CAD operator. If there is an element, the element is designated with a mark (image acquisition flag) to extract the CAD image.

Further, identification of the used elements of other CAD data, identification of the elements used for a plurality of belonging groups, identification of multiple reference elements and pattern matching of the steps may be conducted.

In order to identify the elements used in the other CAD data, all elements of the design procedure document are retrieved and the element of the other CAD data may be used in the element. This element may be a start point in design, so that it is important. Therefore, the element is designated with a mark (image acquisition flag) to extract CAD image.

The elements used in a plurality of belonging groups are important to identify the relation between a plurality of positions thereof. Therefore, the element is designated with a mark (image acquisition flag) to extract CAD image.

The element used to prepare a number of elements is often important. Accordingly, the element is designated with a mark (image acquisition flag) to extract a CAD image.

The pattern matching of steps changes the state of representation of the pattern matching and elements of the design procedure document. A CAD image corresponding to the extracted element is obtained and is output together with the design procedure document.

Edition of the design procedure document in such a manner makes the element and CAD image corresponding to its stage clearer and easier to understand them.

Now, each step for extracting the above-mentioned object element will be described in more detail.

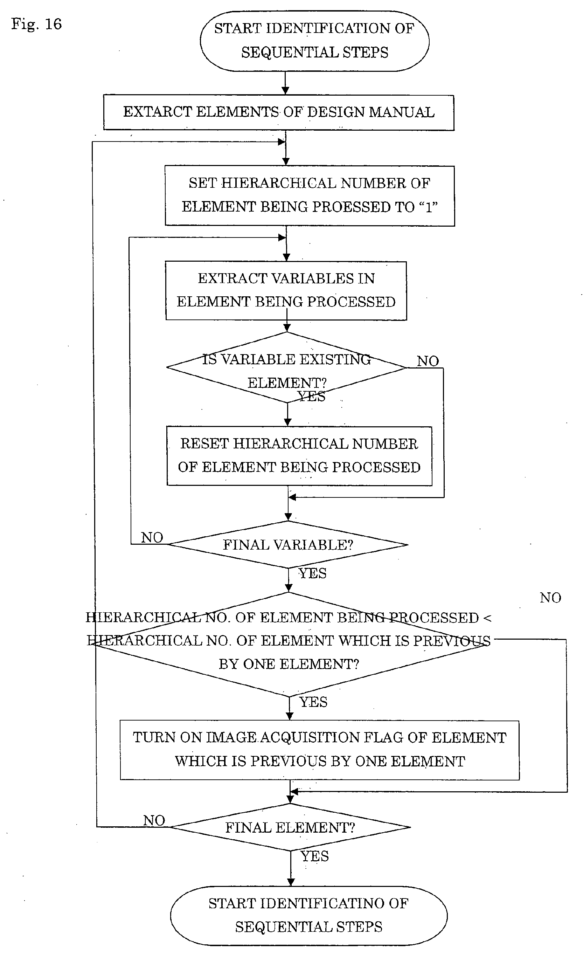

Fig. 16 shows a flow of a process to identify the sequential elements in the design procedure document. In Table 13, the element of the design procedure document is designated with a hierarchical number in accordance with the flow to identify the sequential elements. An image acquisition flag, a mark to obtain a CAD image for the last element in the sequential elements is turned on.

**[Table 13]**

| Element Name | Hierarchical No. | Image acquisition flag |
|---|---|---|
| Point. 1 | 1 | |
| Line. 1 | 2 | On |
| Point. 2 | 1 | |
| Line. 2 | 2 | |
| Corner. 1 | 3 | On |
| Sketch. 1 | 1 | |
| pipe | 4 | On |

A process for identifying sequential elements comprises reading the elements of the design procedure document in an order and extracting their element names. The hierarchical number for the element name which is to be processed next is set to "1". The variable of the preparing step of the element is extracted. For example, the variables of the preparing step of a first element "point. 1" are <0>, <20>, <0> which are extracted. Retrieval is conducted to determine whether the variables <0>, <20>, <0> exist in the existing element name. Since the element "point. 1" is the first element, existing element name per se does not exist. Of course, all variables <0>, <20>, <0> do not exist in existing element name. Accordingly, the hierarchical number of the element "point. 1" remains "1".

Then, an element "line. 1" is extracted. Its hierarchical No. is set "1" and the variable, of the preparing step is extracted. The variables of the preparing step of "line. 1" are <Z axis>, <point. 1>, <0>, <25> and these are extracted. Retrieval is conducted to determine whether the variables <Z axis>, <0>, <25> exist in the existing element name. The variables <Z axis>, M0>, M25> do not exist in the existing element name. The variable <point. 1> is identical with existing element name "point. 1". Accordingly, the hierarchical No. of the element name "line. 1" is reset again.

So, resetting of the hierarchical No. is conducted as shown in the flow chart of Fig. 5. Hierarchical No. 1 of the element name "line. 1" is obtained. The hierarchical No. 1 is compared with the hierarchical No. 1 of the element name "point 1". If the hierarchical No. of the relevant element name "line. 1" is equal to or larger than the hierarchical No. of the element name "point. 1" which is being processed, the hierarchical No. lof the relevant element name "line. 1" is added with 1 to make it 2.

Subsequently, an element "point. 2" is extracted and its hierarchical No. is set to "1" and the variable of the preparing step is extracted. Any one of the variables <0>, <0>, <15> of the element "point. 2" does not match the existing element name. Accordingly, the hierarchical No. of the element "point. 2" remains to be "1".

Then, the element "line. 2" is similarly extracted. Its hierarchical No. is set to "1". The variable of the preparing step is extracted. The variable <point. 2> of those of the element "line. 2" is identical with existing element name "point. 2".

In such a manner, the hierarchical No. of the element "line. 2" is changed from 1 to 2 and is reset again.

Then, the hierarchical No. of the element "corner. 1" is preset to "1" and the variable of the preparing step is extracted. The variables <line.2> and <line. 1> of those of the element "corner. 1" are identical to existing element names "line. 2" and "line. 1". Accordingly, the hierarchical No. of the element name "corner. 1" is changed. The hierarchical No. 2 of the element name "line. 2" is added with 1 to make it 3.

The element name "pipe" has its variables <sketch 1> <corner. 1> which are identical with existing element names. Since <corner. 1> has a hierarchical No. 3, the hierarchical No. 3 is added with 1 to make the hierarchical No. 4.

In such a manner, all the elements are provided with hierarchical Nos. as shown in Table 13. The hierarchical Nos. of all the elements are retrieved. If the hierarchical No. of the element to be processed is smaller than that of the element which is previous by one element, the image acquisition flag is turned on to obtain CAD image of the element which is previous by one element. The reason resides in that sequential preparing steps are completed in the element which is previous by one element, so that a new preparing step is often started if the hierarchical No. of the element to be processed is smaller than that of the element which is previous by one element. If the CAD image corresponding to the element which is previous by one element is displayed, a CAD image of the final element, which is a group of sequential preparing steps can be displayed.

Understanding of a group of design steps becomes easier by identifying the elements of the sequential design steps, ascertaining elements of every group of design steps and displaying a CAD image corresponding to the element, so that the final element is represented as an element which performs its function.

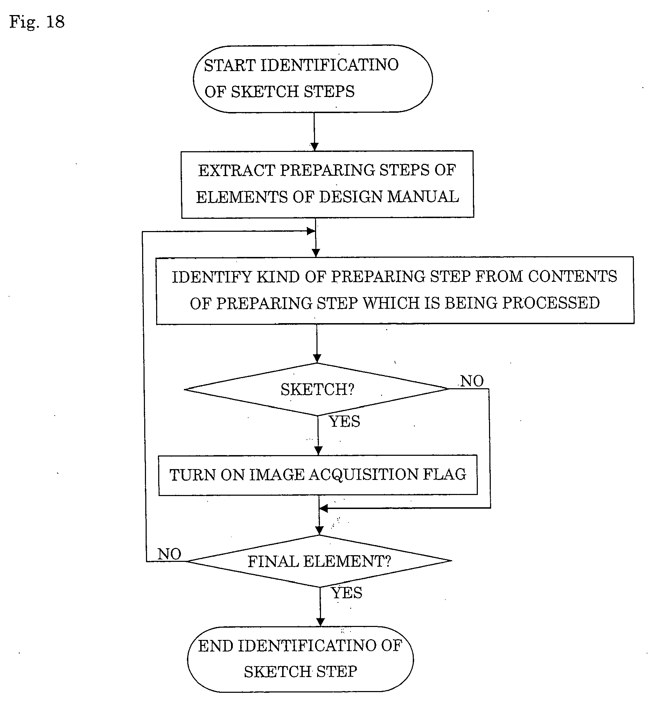

Fig. 18 shows a flow of process to retrieve the elements containing a step to prepare a sketch in the preparing step of the element in the design procedure document. Table 14 shows an element containing a sketch in the preparing step of the elements of the design procedure document, which is designated with a flag which is a mark to acquire a CAD image based upon the flow.

**[Table 14]**

| Element Name | Kinds of preparing step | Image Acquisition flag |
|---|---|---|
| Point. 1 | Point (coordinates) | |
| Line. 1 | Line (starting point and direction | |
| Point. 2 | Point (coordinates) | |
| Line. 2 | Line (starting point and direction) | |
| Corner. 1 | Corner | |
| Sketch. 1 | Sketch | On |
| pipe | Sweep surface | |

A process for retrieving elements which contain steps for a sketch in preparing steps of elements in the design procedure document comprises extracting the preparing steps of the elements in the design procedure document in an order. The contents of the preparing steps are identified for each element. The kind of the element is entered into the entry of the kind of the preparing step of Table 14.

For example, the kind of the preparing step for the element name "point. 1" is a point (coordinates) since a point is formed in the position defined by the specified coordinates. The kind of the preparing step for the element name "line. 1" is a line (starting point and direction) since a line is formed from a specified starting point to specified ending point in a specified direction. The elements of the design procedure document are identified in such a manner.

Since the content of the preparing step for the element name "sketch. 1" is "a sketch is prepared", the image processing flag of the element name "sketch. 1" for which the CAD image is extracted is turned on.

All elements are retrieved in such a manner. The image processing flag is turned on so that a CAD image is obtained for an element in which the kind of its processing step is a sketch.

Preparation of a sketch is often conducted to prepare a two-dimensional sectional shape in CAD design. Thus prepared two-dimensional sectional shape will be often referenced for the preparation of a three-dimensional structure. Thus, the element in which the preparation step is a sketch is often a first work having a group and is important. Therefore, representation of the element which is a sketch and its CAD image makes the understanding of the contents of the design procedure document easy.

Now, a method of representing named element and CAD image corresponding thereto will be described.

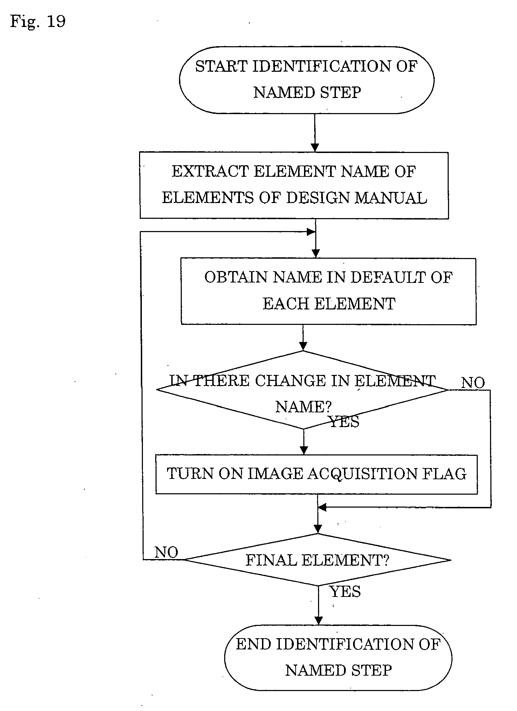

Fig. 19 shows a flow chart for retrieving elements which are named by a designer or CAD operator in the elements of the design procedure document. Table 15 shows the element names and default names which are element names automatically prepared by CAD in the design procedure document, for comparison there between. The element which is named in the elements of the design procedure document is designated with a flag which is a mark to obtain a CAD image.

**[Table 15]**

| Element Name | Default Name | Image Acquisition Flag |
|---|---|---|
| Point. 1 | Point. oo | |
| Line. 1 | Line. oo | |
| Point. 2 | Point. oo | |
| Line. 2 | Line. oo | |
| Corner. 1 | Corner.oo | |
| Sketch. 1 | Sketch. oo | |
| Pipe | Sweep surface oo | On |

A process for retrieving elements which are named by a designer or CAD operator in the elements of the design procedure document comprises extracting element names of the design procedure document in an order and then outputting the default names of its element in contrast thereto.

For example, the default name which is obtained for the first element name "point. 1" is "point.oo". Since the element name is not changed for the default name, net element is retrieved. All elements are retrieved in an order by repeating the above-mentioned steps.

The default name corresponding to the element name "pipe" is "sweep surface. oo" representing the content of the preparing step and is different from its element name. Therefore, the element name "pipe" is an element which is named by a designer on CAD operator.

In such a manner, all elements are retrieved. A flag is turned on which represents to obtain CAD image for an element, the element name of which is named. The element which is named by an designer or CAD operator may be often a final element of a group of workings. Displaying of the final element of a group of workings together with its CAD image makes it easy to understand its element and a group of workings.

Now, a method of changing the display state of an element will be described.

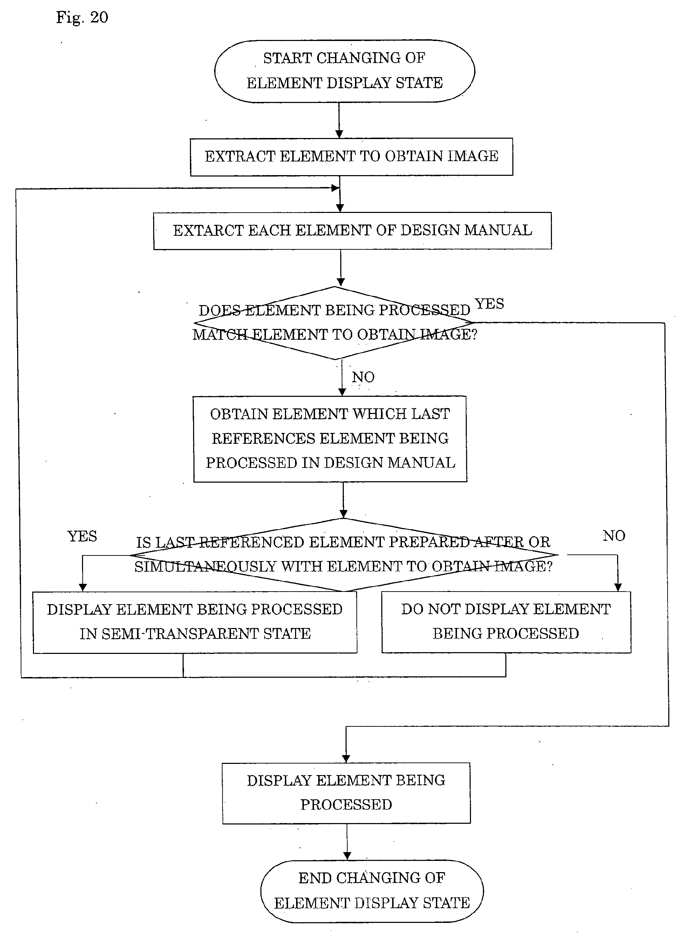

Fig. 20 shows a flow for changing the display state of an element. Table 16 shows the change state of the element in case in which the image of the element "corner. 1" is displayed.

In the present embodiment, the elements in which their image acquisition flag is turned on in Tables 2 through 15 have the element names "line. 1", "corner. 1", "sketch.1", "pipe". A process to change the display state of an element will be described by way of an element name "corner. 1".

**[Table 16]**

| Element Name | Final Reference | Display State |
|---|---|---|
| Point. 1 | Line. 1 | Non-display |
| Line. 1 | Corner. 1 | Semi-transparent |
| Point. 2 | Line. 2 | Non-display |
| Line. 2 | Corner. 1 | Semi-transparent |
| Corner. 1 | Pipe | Display |
| Sketch. 1 | Pipe | Non-display |
| pipe | None | Non-display |

Firstly, element "corner. 1" is extracted as an element for which a CAD image is displayed. Then, elements of the design procedure document are extracted in an order. When an element "point. 1" is extracted, it is determined that element "point. 1" which is being processed is different from the element "corner. 1" for which the image is obtained. Thus, the process will proceed to NO flow. The element which finally references the element "point. 1" in the design procedure document is "line. 1". Since the element "line. 1" is previous to the element "corner. 1" for which the image is obtained, the element "point. 1" is made non-display state.

Then, when the element "line. 1" is extracted, the element "line. 1" which is being processed is different from the element "corner. 1" for which an image is obtained. Thus, the process will proceed to NO flow. The element which lastly references the element "line. 1" in the design procedure document is "corner. 1". Since the element "corner. 1" is identical with the element "corner. 1" for which the image is obtained, the element "line. 1" is made semi-transparent.

Elements "point. 2" and "line. 2" are made non-display and semi-transparent, respectively.

Then, element "corner. 1" is extracted. Since the element "corner. 1" which is being processed is different from element "corner. 1" for which an image is obtained, the process will proceed to YES flow. The CAD image is displayed by making the element "corner. 1" display state and semi-transparent elements "line. 1" and "line. 2" are displayed.

The elements "sketch. 1" and "pipe. 1" are made non-display state since they are not prepared when the element "corner. 1" is prepared.

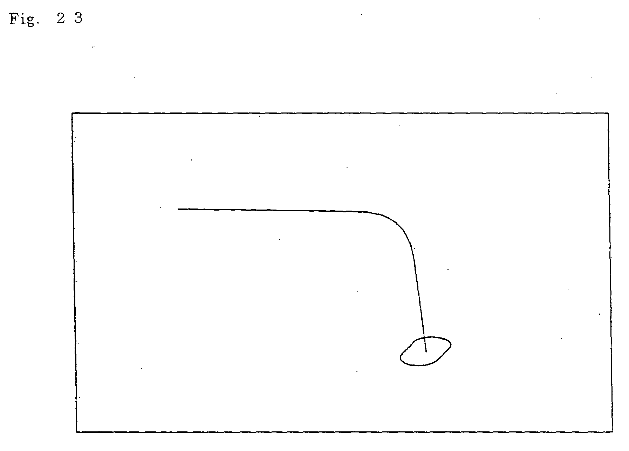

By doing so, a CAD image at the time when "corner. 1" is displayed as shown in Fig. 22 in the element "corner. 1". At this time, "line. 1" and "line. 2" are displayed in a semi-transparent manner to match the display at the corners.

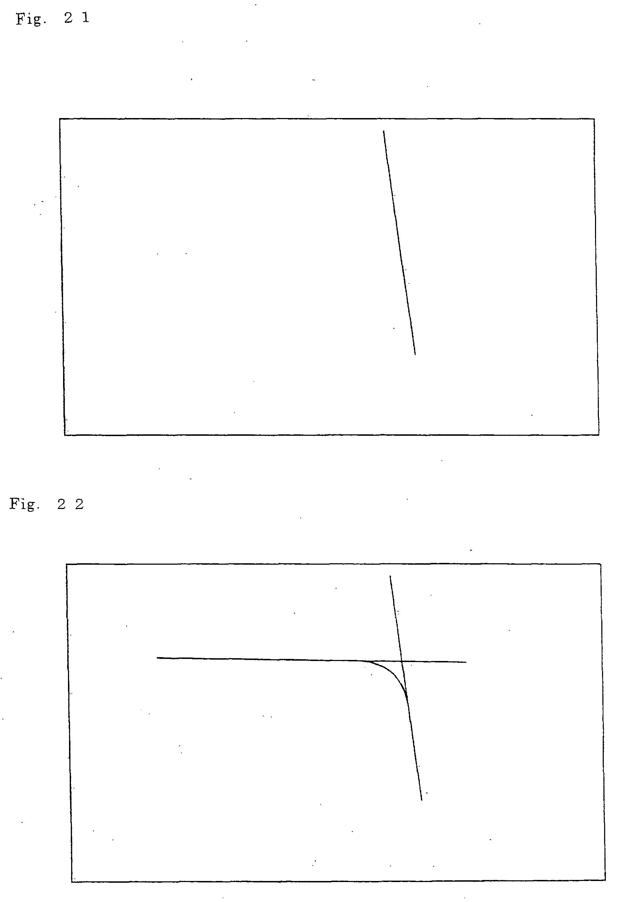

Similarly, a CAD image in the element "line. 1" is illustrated in Fig. 21. A CAD image in the element "sketch. 1" is illustrated in Fig. 23. A CAD image in the element "pipe" is illustrated in Fig. 14.

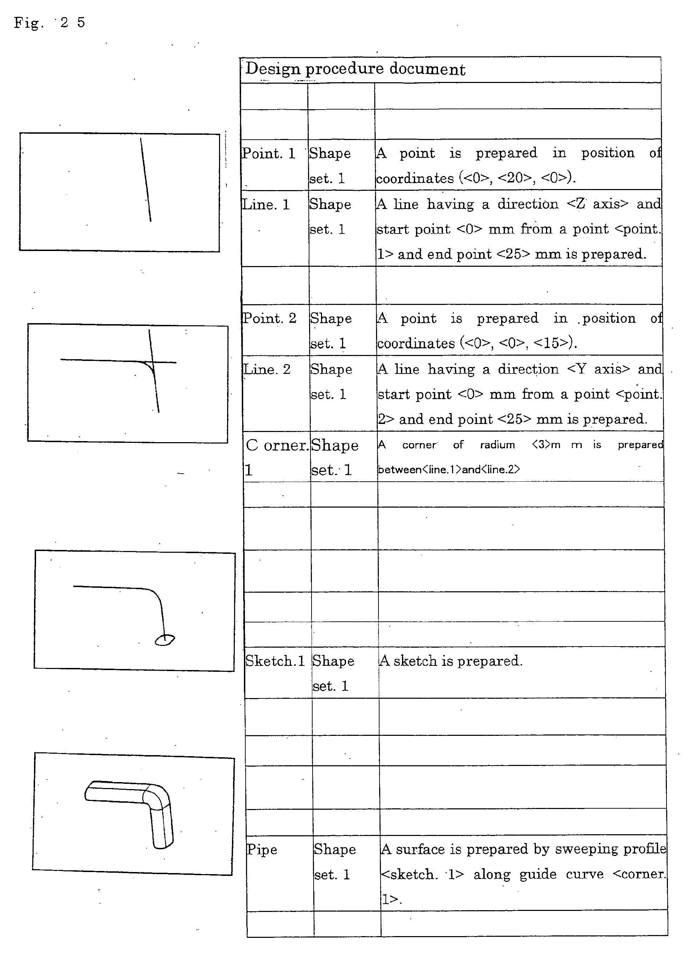

After display states of the elements for which images are obtained are changed in such a manner, the design procedure document and corresponding CAD images are output. The flow chart for output is shown in Fig. 12. Output format may be any of EXCEL or HTML format. A result which is output in EXCEL format is shown in Fig. 25.

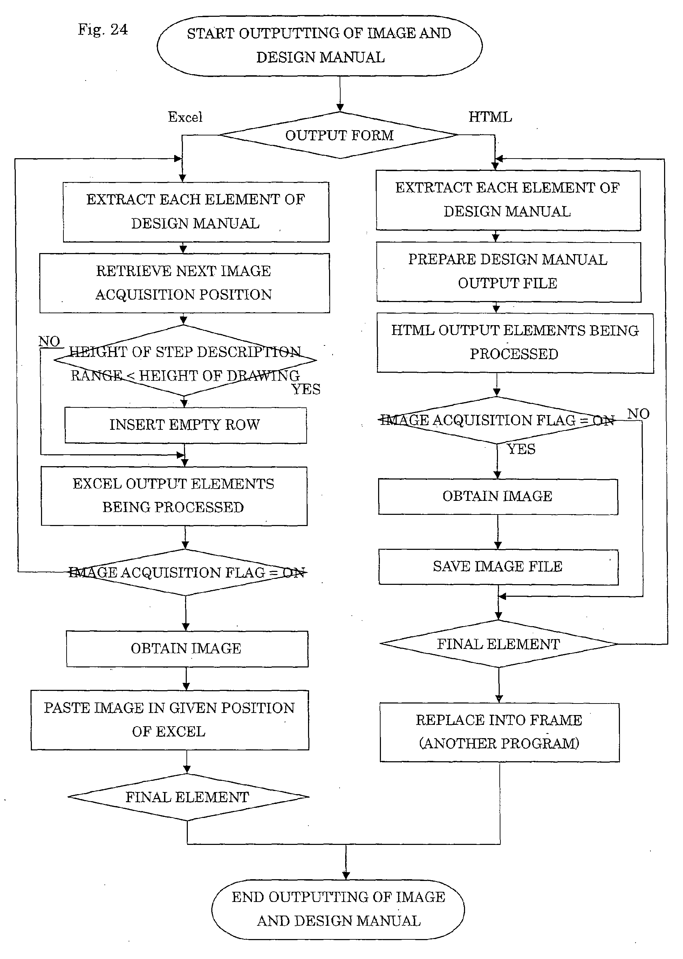

If the images are output in EXCEL format, each element of the design procedure document is extracted and the image acquisition positions are retrieved in Fig24. The height of the image is compared with the number of rows of the elements of the design procedure document to which the images are attached. When the number of the rows of the elements is smaller, a necessary number of empty rows are inserted. After the space between the elements for which the images are obtained has been adjusted, CAD images are obtained and are attached to the design procedure document which is output in EXCEL format. Since CAD images and the design procedure document are output so that their positions match to each other as shown in Fig. 25, the image can be visually recognized at each stage of the elements of the design procedure document and understanding thereof is easy.

If the images are output in HTML format, the image can be visually recognized at each stage of the elements of the design procedure document and understanding thereof is easy.

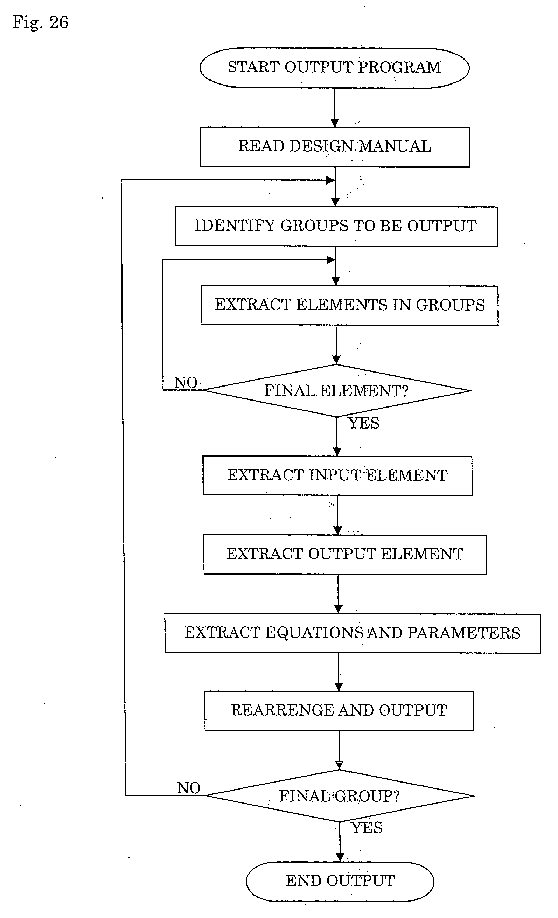

Now, a flow for arranging this design procedure document is illustrated in Fig. 26.

Firstly, the design procedure document is read into the design procedure document automatically preparing apparatus. Groups of the elements of the design procedure document to be noted are determined as those to be output. The elements of the relevant group are extracted from the description of the entry of the belonging group. Thereafter, the input elements and output elements of the group are retrieved for extraction until final element. The equation and parameter which is entered into the preparing step of the element is extracted. The extracted elements are rearranged in an ascending or descending order for output.

Then, a method of preparing the output elements and a method of preparing named elements are also output.

Edition of the design procedure document in such a manner makes the mutual relation between points and elements clear and understanding thereof easy. Displaying of CAD images in thus edited design procedure document as mentioned above makes the understanding of the design procedure document easier.

Identification of the element which uses other CAD data, identification of the element used in a plurality of belonging groups, identification of multiple reference elements and pattern matching of steps will be described in detail by way of a design procedure document of the other embodiment.

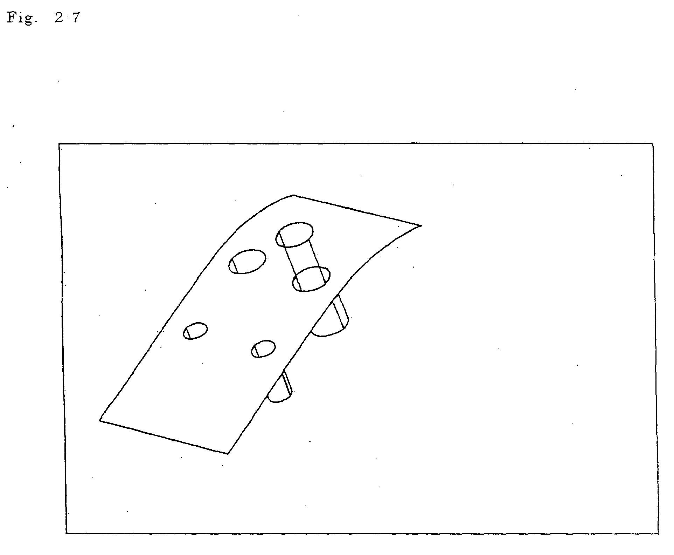

The above-mentioned example of the design procedure document showing the steps for forming two large holes and two small holes in an inclined face is illustrated in Table 17. A drawing which is designed by the steps of Table 17 is illustrated in Fig. 27.

**[Table 17]**

| Element Name | Belonging Group | Preparing Step |
|---|---|---|
| DESIGN-SRF | External reference | External reference data |
| Point. 1 | SMALL_HOLE | A point is prepared in position of at coordinates (<45>, <60>, <-20>). An origin is made <default (origin)>. |
| Plane. 1 | SMALL_HOLE | A plane passing through point <point. 1> in parallel with reference plane <XY plane> is prepared. |
| Projection. 2 | SMALL_HOLE | <point.1> is projected on support face <plane. 1>. |
| Circle. 1 | SMALL_HOLE | A circle having radius <5>mm and center <projection. 2> is prepared on support face <plane. 1>. |
| Sweep. 1 | SMALL_HOLE | A sweep surface having length from 1<-50>mm to 2<0>mm at draft angle <-3>° to direction <Z axis> passing through guide curve <circle. 1> is prepared. |
| GSD trim. 1 | SMALL_HOLE | <DESIGN_SRF> and <sweep. 1> are trimmed. |
| Point. 2 | SMALL_HOLE | A point is prepared in position of at coordinates (<-100>, <0>, <0>). An origin is made <point. 1>. |
| Projection. 4 | SMALL_HOLE | <Point.2> is projected on support face <plane. 1>. |
| Circle. 2 | SMALL_HOLE | A circle having radius <5>mm and center <projection. 4> is prepared on support face <plane. 1>. |
| Sweep. 2 | SMALL_HOLE | A sweep surface having length from 1<-50>mm to 2<0>mm at draft angle <-3>° to direction <Z axis> passing through guide curve <circle. 2> is prepared. |
| GSD trim. 2 | SMALL_HOLE | <GSD trim. 1 > and <sweep. 2> are trimmed. |
| Point. 3B | BIG_HOLE | A point is prepared in position of at coordinates (<0>, <-50>, <20>). An origin is made <point. 1>. |
| Projection. 6 | BIG_HOLE | <Point.3> is projected on support face <plane. 1>. |
| Circle. 3B | BIG_HOLE | A circle having radius <10>mm and center <projection. 6> is prepared on support face <plane. 1>. |
| Sweep. 3 | BIG_HOLE | A sweep surface having length from 1<-50>mm to 2<0>mm at draft angle <-3>° to direction <Z axis> passing through guide curve <circle. 3> is prepared. |
| GSD trim. 3 | BIG_HOLE | <GSD trim. 2 > and <sweep. 3> are trimmed. |
| Point. 4B | BIG_HOL | A point is prepared in position of at coordinates (<-100>, <-50>, <0>). An origin is made <point. 1>. |
| Projection. 8 | BIG_HOLE | <Point.4> is projected on support face <plane. 1>. |
| Circle. 4S | BIG_HOLE | A circle having radius <10>mm and center <projection. 6> is prepared on support face <plane. 1>. |
| Sweep. 4 | BIG_HOLE | A sweep surface having length from 1<-50>mm to 2<0>mm at draft angle <-3>° to direction <Z axis> passing through guide curve <circle. 4> is prepared. |
| GSD trim. 4 | BIG_HOLE | <GSD trim. 3> and <sweep. 4> are trimmed. |

Identification of the element which uses other CAD data in CAD designing is conducted by using the elements of the other CAD data in accordance with the above-mentioned design procedure document will be described. Although the elements of other CAD data may be used for designing, the element which uses other elements is a start point in designing so that it is important. In .this case, all elements in the design procedure document are retrieved and the elements are designated with marks (image acquisition flags) to extract its CAD image.

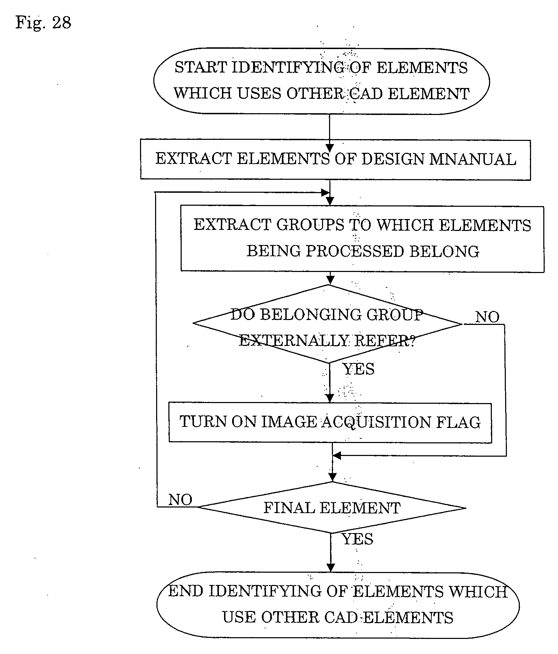

As shown in Fig. 28, each element of the design procedure document is extracted and the belonging group of its element is extracted. If the description of the belonging group is "external reference", the element uses those of the other CAD data. The image acquisition flag which represents the acquisition of the CAD image is turned on. Identification of all elements is achieved in such a manner. Only "DESIGN SRF" is "external reference" in the design procedure document of the present embodiment.

An identification result is shown in Table 18.

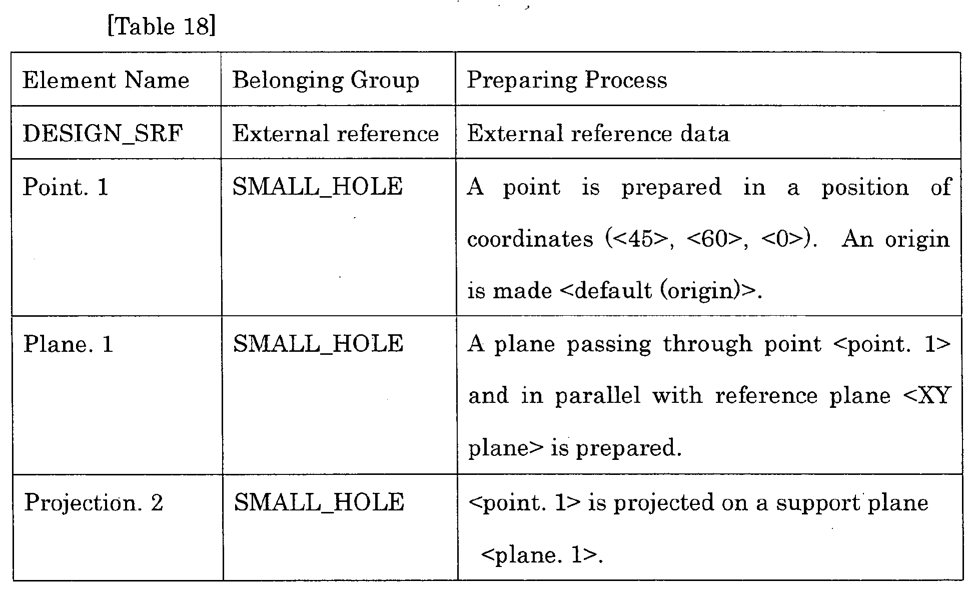

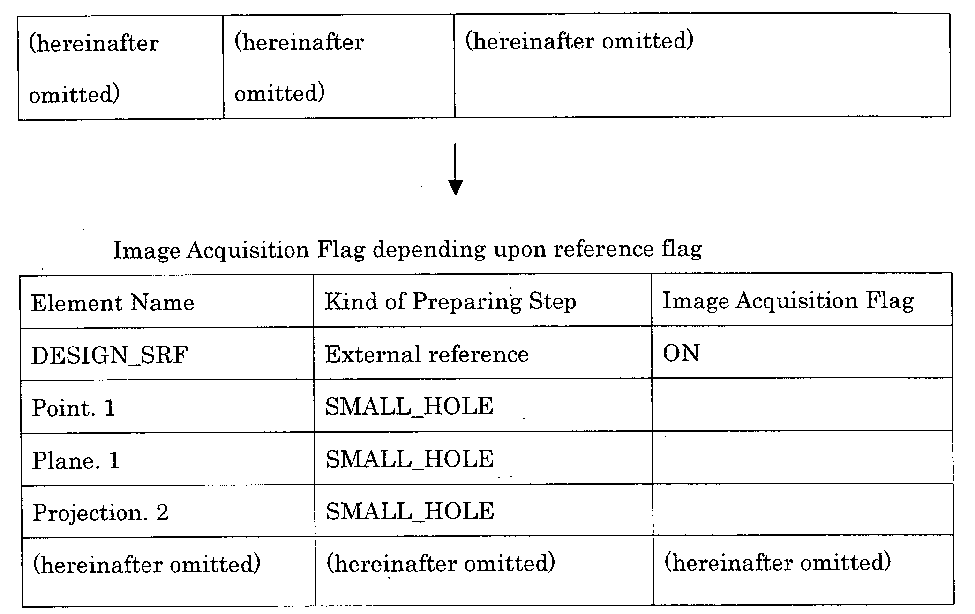

Now, identification of the elements which are used for a plurality of groups will be described. The elements used for the preparation step for elements belonging to a plurality of belonging groups may be related with the relation between parts (spacing between parts) and restriction requirement common to parts (extraction direction on molding) and are important to know the relations between a plurality of positions of parts. Therefore, the elements are designated with marks (image acquisition flags) to extract the CAD image.

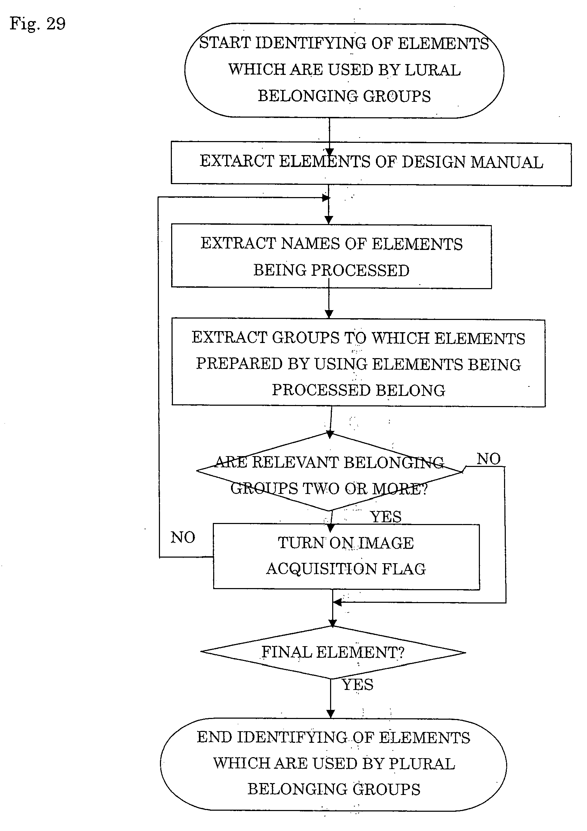

As shown in Fig. 29, each of elements of the design procedure document is extracted. The name of the extracted element is extracted. Identification is made whether its element is used for a variable in the preparing step of the other elements in the design procedure document. If it is used for the variable in the preparing step of the element, all groups to which the element belongs are extracted. If the element is used in the preparing step of the element used for a plurality of groups to which the element belongs, an image acquisition flag which is a flag for obtaining an CAD image is turned on. In such a manner, identification of all elements is conducted. In the design procedure document of the present embodiment, "point. 1" is used in the elements "plane. 1" and "point. 3". The group to which the element "plane. 1" is "SMALL_HOLE". The group which the element "point. 3" is "BIG_HOLE". Accordingly, the element "point. 1" is used in the preparing step of the elements belonging to a plurality of groups "SMALL_HOLE" and "BIG_HOLE".

A result of identification is shown in Table 19.

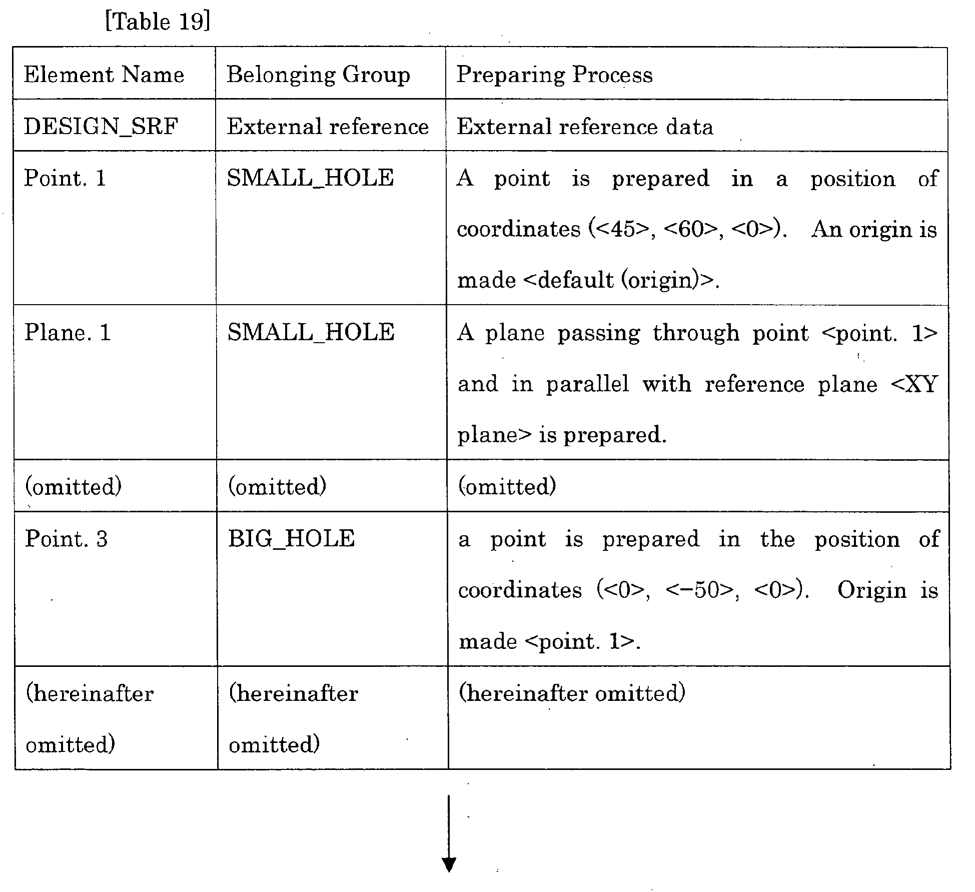

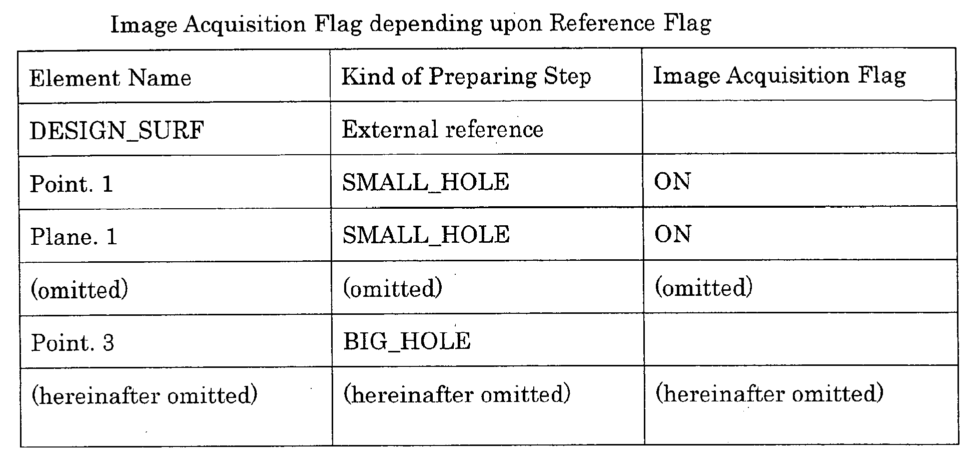

Now, identification of multiple reference elements used for the preparing step of a plurality of elements (more than two positions) will be described. The element used for the preparing step of a plurality of elements may be often important. Displaying of the CAD image related with the element is advantageous to understand the design procedure document.

The multiple reference element may be also used to prepare a local shape used in may portions such as corner, it is also a key element for preparing a modeling shape.

The multiple reference element may be related with the relation between parts (spaces between parts) and restriction condition common to parts (extraction direction on molding), and is important to determine the relation between a plurality of positions. Accordingly, the element is designated with a mark (image acquisition flag) to extract the CAD image.

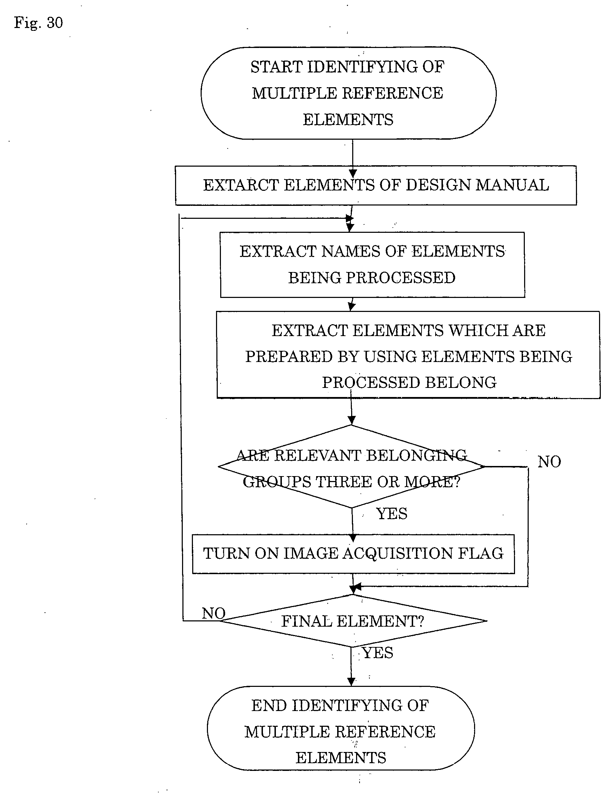

As shown in Fig. 30, each of elements of the design procedure document is extracted. The name of the extracted element is extracted. Identification is made whether its element is used for a variable in the preparing step of the other elements in the design procedure document. If it is used for the variable in the preparing step of the element, all groups to which the element belongs are extracted. If the number of the elements used in the preparing step of the element is 3 or more, an image acquisition flag which is a flag for obtaining an CAD image is turned on. In such a manner, identification of all elements is conducted. In the design procedure document of the present embodiment, "point. 1" is used in flown elements "plane. 2", "point. 3" and "point. 4". Accordingly, the element "point. 1" is a multiple reference element used in the preparing step of 3 or more elements.

A result of identification is shown in Table 20.

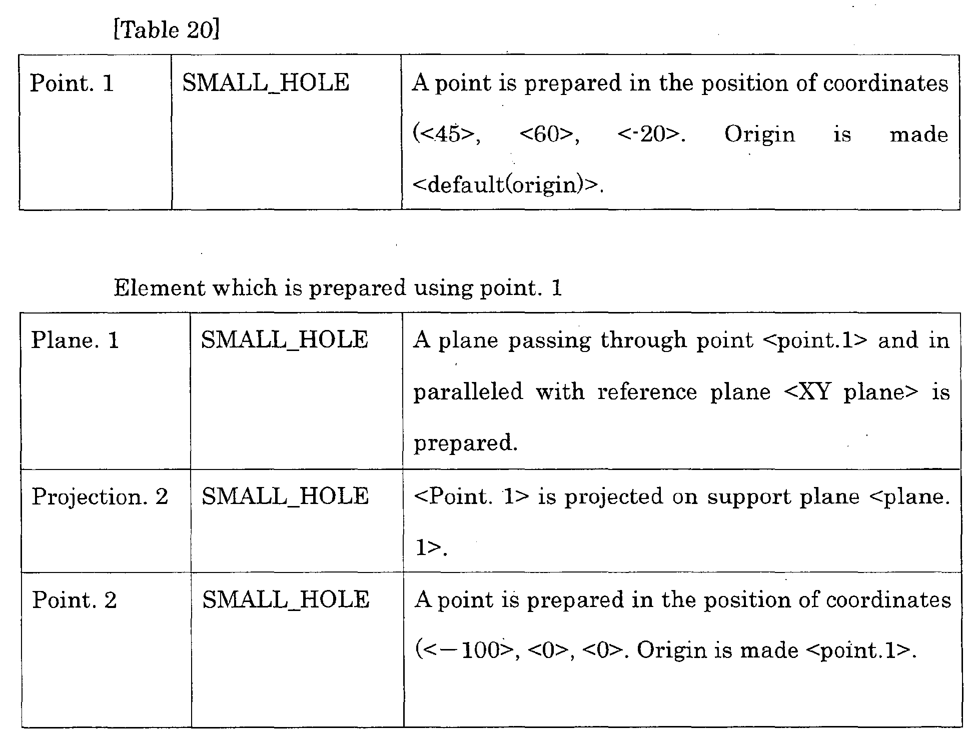

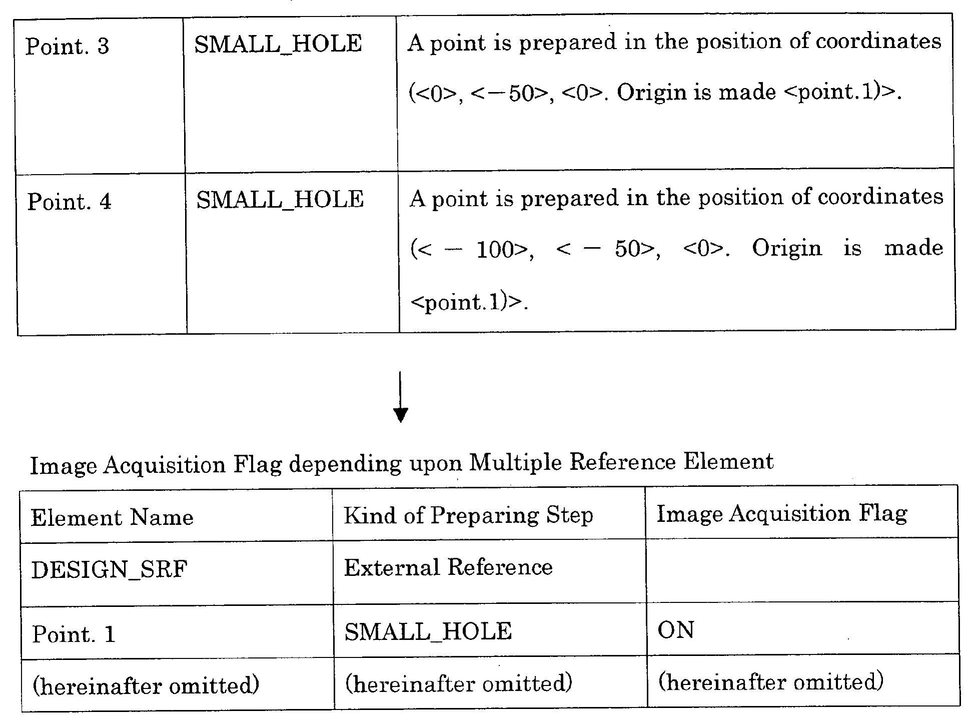

Identification of the preparing step of patterned element will be described.

A series of same preparing steps may be conducted for a plurality of positions in one CAD data. If the series of the preparing steps can be captured as one element group, then understanding of the elements of the design procedure document would become fast and easy. The series of preparing steps and a series of preparing steps which are specified by a designer are registered in a dictionary as a pattern. Retrieval of a series of preparing steps is conducted in a design procedure document of the other CAD data to determine whether they match the pattern of the preparing steps which are registered in the dictionary. If the series of preparing steps are identified, the role of the series of preparing steps can be understood as an element group by explicitly describing the meaning specified by the designer for the step, so that grasping of the structure of the design procedure document becomes easy.

Therefore, the last element of the series of the preparing steps is designated with a mark (image acquisition flag) to extract an CAD image.

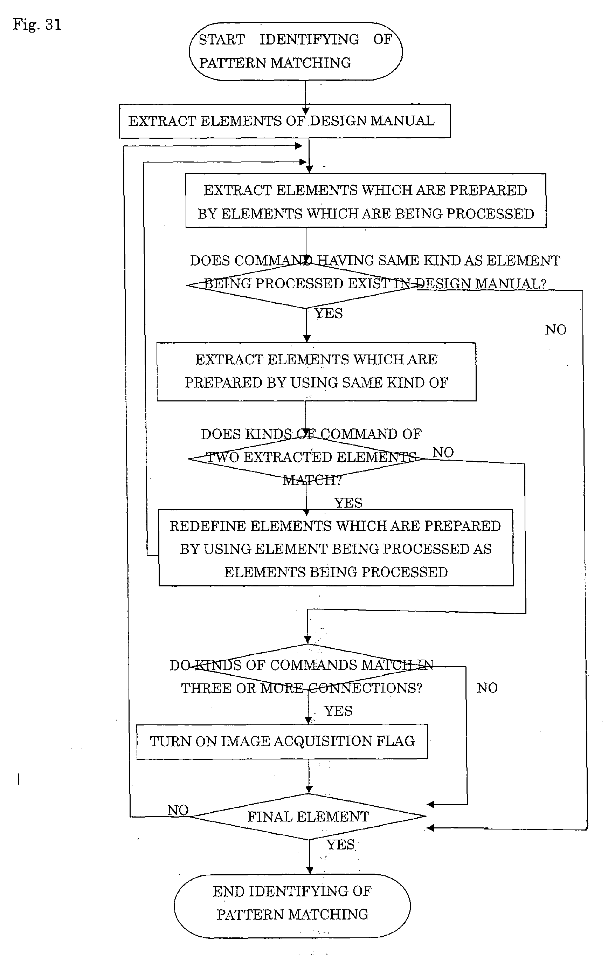

As shown in Fig. 31, each of the elements of the design procedure document is extracted. The name of the element is extracted as an element which is being processed. The element which is prepared by using its element is extracted. If a command which is same as the element which is being processed in kind exists in the design procedure document, the element which is prepared by using the element in which the name of a first element is extracted is redefined as an element which is being processed. If the kinds of the command of two elements match, next element is redefined as an element which is being processed for conducting extraction.

[0100] Extraction is conducted in such a manner. If the kinds of the commands are same in three connections, the image acquisition flag to obtain the CAD image is turned on. Identification of all elements is conducted in such a manner.

In the design procedure document of the present embodiment, four elements "point. 1", "projection. 2", "circle. 1", "sweep. 1", "GSM trim. 1" is a series of patterns. They are used in a series of elements subsequent to the elements "point. 2" , "point. 3" and "point. 4", respectively.

A result of identification is shown in Table 21.

| Element Name | Belonging Group | Preparing Step |
|---|---|---|
| Point. 1 | SMALL_HOLE | A point is prepared in the position of coordinates (<45>, <60>, <-20>). Origin is made <default (origin)>. |
| Projection. 2 | SMALL_HOLE | <point. 1> is projected on support plane <plane. 1>. |
| Circle. 1 | SMALL_HOLE | A circle having radius <5> mm around center <projection 2> is prepared on support plane <plane. 1>. The circle is not projected on support plane. |
| Sweep. 1 | SMALL_HOLE | A sweep surface having length 1<-50>mm to 2<0>mm passing through guide curve <circle. 1> at draft angle <-3>° relative to direction <Z axis> is prepared. |
| GSO trim. 1 | SMALL_HOLE | <DESIGN_SRF> and <sweep. 1> are trimmed. |

### [Advantages of the Invention]

In accordance with the present invention, a design procedure document which is written in a natural language can be automatically prepared from CAD data. A group to which each element of the design procedure document can be explicitly described for the element and the content of the preparing step can be explicitly described.

The elements of necessary part of the design procedure document can be automatically extracted. The elements can be rearranged. The elements which have a strong relationship with the element in interest can be automatically extracted. Understanding and considering of the design procedure document can be achieved in a fast, proper and easy manner. Accordingly, the invention can be applied for changing and verification of drawings which are designed by CAD and education of designers and CAD operators.

The design procedure document can be displayed by text data (for example, EXCEL and the like) and can be used via a network system.

The design procedure document comprises elements which are written in a natural language. A preparing step is described for each element. Specific element of the design procedure document is automatically extracted. A CAD image corresponding to the extracted element is displayed. Therefore, a design procedure document is automatically prepared from CAD data. The elements of the design procedure document, which are important and necessary understand the design procedure document can be automatically extracted. Since the CAD image corresponding to the step for preparing the element can be displayed together with the element, the design procedure document can be visually and readily understood. The gist of the design procedure document can be easily understood.

The design procedure document can be displayed by text data (for example, EXCEL and the like) and can be applied via a network system.

## Claims

1. A process for automatically preparing a CAD design procedure document in which the CAD design procedure document is prepared by automatically converting CAD data into the design procedure document written in a natural language by means of a converter,
**characterized in that** said design procedure document comprises elements which are written in a natural language, each element including a name of group to which the element belongs and its preparing step, specific elements of said design procedure document being extracted; the extracted elements being extracted and rearranged together with the groups to which the elements belongs and their preparing steps; the elements being displayed together with the groups and their preparing steps.

2. A process for automatically preparing a design procedure document using a method of converting CAD knowledge codes which are used in a knowledge-base CAD into the design procedure document which is written in a natural language, **characterized in that** said CAD knowledge codes from said knowledge-base CAD are output, said output (CAD knowledge codes being output into an intermediate representation codes which do not depend upon said knowledge CAD by using an intermediate representation code converting apparatus, and said intermediate representation codes being into said design procedure document corresponding to said intermediate representation code by using a document describing and generating apparatus, and said design procedure document comprises elements which are written in a natural language, each element including a name of group to which the element belongs and its preparing step, specific elements of said design procedure document being extracted; the extracted elements being extracted and rearranged together with the groups to which the elements belongs and their preparing steps; the elements being displayed together with the groups and their preparing steps.

3. A process for automatically preparing a CAD design procedure document as claimed in Claim 1 or 2 wherein said elements of specific belonging group are automatically extracted from said design procedure document and each of extracted elements, its belonging group to which the element belongs and its preparing step are displayed.

4. A process for automatically preparing a CAD design procedure document as claimed in Claim 1 or 2 wherein an element of a specific belonging group is automatically extracted from said design procedure document, variables used in the preparing step of the element are automatically extracted, the name of an element which matches said variable in the element of said design procedure document which belongs to a group other than said specific group is extracted and displayed as an input element.

5. A process for automatically preparing a CAD design procedure document as claimed in Claim 1 or 2 wherein an element of a specific belonging group is automatically extracted from said design procedure document, if the extracted element is used in the preparing step of an element which belongs to a group other than said specific belonging group, said element of said specific belonging group is extracted and is displayed as an output element.

6. A process for automatically preparing a CAD design procedure document as claimed in Claim 1 or 2 wherein an element in which equation is set forth in the preparing step of said design procedure document is extracted; an element in which its parameter is set forth in the preparing step of said design procedure document is extracted; an element of a specific belonging group is automatically extracted from said design procedure document; a variable used in said preparing step of the element of said specific belonging group is automatically extracted; the name of the element in which said variable matches the name of the element having an equation set forth in said preparing step, its belonging group and the preparing step are extracted together, a variable is extracted from the preparing step of the element having an equation set forth in the extracted preparing step; an element in which its element name having a parameter set forth in the preparing step of said design procedure document matches said variable is extracted; the name of the element having a parameter set forth in the preparing step of said design procedure document,, its belonging group and preparing step are extracted and displayed together.

7. A process for automatically preparing a CAD design procedure document as claimed in Claim 1 or 2 wherein elements of specific belonging groups are extracted from said design procedure document and they are arranged and displayed in an ascending or descending order.

8. A process for automatically preparing a CAD design procedure document as claimed in Claim 5 wherein variables in said preparing steps of said elements which are displayed as said output elements are extracted, all of said variables are compared with the element name of said specific belonging group, and matched element name and said preparing step are displayed.

9. A process for automatically preparing a CAD design procedure document as claimed in Claim 1 or 2 wherein elements of specific belonging groups are automatically extracted from said design procedure document; the elements of said extracted elements, which are named by a designer on preparation of a drawing are extracted; the variables in said preparing steps of the extracted elements are extracted; all of the extracted variables are compared with the element names of said specific belonging groups; and the element names which match the extracted variables and said preparing steps are displayed.

10. An apparatus for automatically preparing a CAD design procedure document wherein the CAD design procedure document is prepared by automatically converting CAD data into the design procedure document written in a natural language by means of a converter,
**characterized in that** said design procedure document comprises elements which are written in a natural language, each element including a name of group to which the element belongs and its preparing step, specific elements of said design procedure document being extracted; the extracted elements being extracted and rearranged together with the groups to which the elements belongs and their preparing steps'> the elements being displayed together with the groups and their preparing steps.

11. An apparatus for automatically preparing a design procedure document using a method of converting CAD knowledge codes which are used in a knowledge-base CAD into the design procedure document which is written in a natural language,
**characterized in that** said CAD knowledge codes are output from said knowledge-base CAD, said output (CAD knowledge codes being converted into an intermediate representation codes which do not depend upon said knowledge CAD by using an intermediate representation code converting apparatus, and said intermediate representation codes being converted into said design procedure document corresponding to said intermediate representation code by using a document describing and generating apparatus, said design procedure document comprises elements which are written in a natural language, each element including a name of group to which the element belongs and its preparing step, specific elements of said design procedure document being extracted; the extracted elements being extracted and rearranged together with the groups to which the elements belongs and their preparing steps; the elements being displayed together with the groups and their preparing steps.

12. An apparatus for automatically preparing a CAD design procedure document as claimed in Claim 10 or 11 wherein elements of specific belonging group are automatically extracted from said design procedure document and each of extracted elements, its belonging group to which the element belongs and its preparing step are displayed.

13. An apparatus for automatically preparing a CAD design procedure document as claimed in Claim 10 or 11 wherein an element of a specific belonging group is automatically extracted from said design procedure document, variables used in the preparing step of the element are automatically extracted, the name of an element which matches said variable in the element of said design procedure document which belongs to a group other than said specific group is extracted and displayed as an input element.

14. An apparatus for automatically preparing a CAD design procedure document as claimed in Claim 10 or 11 wherein an element of a specific belonging group is automatically extracted from said design procedure document, if the extracted element is used in the preparing step of an element which belongs to a group other than said specific belonging group, said element of said specific belonging group is extracted and is displayed as an output element.

15. An apparatus for automatically preparing a CAD design procedure document as claimed in Claim 10 or11 wherein an element in which an equation is set forth in the preparing step of said design procedure document; an element in which its parameter is set forth in the preparing step of said design procedure document is extracted; an element of a specific belonging group is automatically extracted from said design procedure document; a variable used in said preparing step of the element of said specific belonging group is automatically extracted; the name of the element in which said variable matches the name of the element having an equation set forth in said preparing step, its belonging group and the preparing step are extracted together, a variable is extracted from the preparing step of the element having an equation set forth in the extracted preparing step; an element in which its element name having a parameter set forth in the preparing step of said design procedure document matches said variable is extracted; the name of the element having a parameter set forth in the preparing step of said design procedure document,, its belonging group and preparing step are extracted and displayed together.

16. An apparatus for automatically preparing a CAD design procedure document as claimed in Claim 10 or 11 wherein elements of specific belonging groups are extracted from said design procedure document and they are arranged and displayed in an ascending or descending order.

17. An apparatus for automatically preparing a CAD design procedure document as claimed in Claim 14 wherein variables in said preparing steps of said elements which are displayed as said output elements are extracted, all of said variables are compared with the element name of said specific belonging group, and matched element name and said preparing step are displayed.

18. An apparatus for automatically preparing a CAD design procedure document as claimed in Claim 10 or 11 wherein elements of specific belonging groups are automatically extracted from said design procedure document; the elements of said extracted elements, which are named by a designer on preparation of a drawing are extracted; the variables in said preparing steps of the extracted elements are extracted; all of the extracted variables are compared with the element names of said specific belonging groups; and the element names which match the extracted variables and said preparing steps are displayed.

19. A process for automatically preparing a CAD design procedure document which is prepared by automatically converting CAD data into the design procedure document which is written in a natural language by using a converting apparatus, **characterized in that** said design procedure document comprises elements which are written in a natural language, a preparing step being written for each element;
a specific element of said design procedure document is automatically extracted; and a CAD image corresponding to said extracted element is displayed.

20. A process for preparing a design procedure document using a method of converting CAD knowledge codes used in a knowledge-base CAD into the design procedure document written in a natural language,
**characterized in that** said CAD knowledge codes are output from said knowledge-base CAD; said output CAD knowledge codes are converted into intermediate representation codes which do not depend upon said knowledge-base CAD by using an intermediate representation code converting apparatus; and said intermediate representation codes are converted into said design procedure document corresponding to said intermediate representation codes by using a document describing and generating apparatus;
said design procedure document comprises elements which are written in a natural language, a preparing step being written for each element;
a specific element of said design procedure document is automatically extracted; and a CAD image corresponding to said extracted element is displayed.

21. A process for automatically preparing a CAD design procedure document as claimed in Claim 19 or 20 wherein said automatic extraction of the specific element of said design procedure document identifies sequential design steps and extracts an element to display a CAD image for each group of said sequential design steps.

22. A process for automatically preparing a CAD design procedure document as claimed in Claim 19 or 20 wherein said automatic extraction of the specific element of said design procedure document extracts a sketch element to prepare a sketch from the preparing step of the element of said design procedure document and displays a CAD image corresponding to the element having said sketch element.

23. A process for automatically preparing a CAD design procedure document as claimed in Claim 19 or 20 wherein said automatic extraction of the specific element of said design procedure document extracts an element, the name of which is named by a designer or CAD operator from the elements of said design procedure document and displays a CAD image corresponding to said named element.

24. A process for automatically preparing a CAD design procedure document as claimed in Claim 19 or 20 wherein said automatic extraction of the specific element of said design procedure document extracts an element which uses the element of other CAD data from the elements of said design procedure document and displays a CAD image corresponding to said extracted element.

25. A process for automatically preparing a CAD design procedure document as claimed in Claim 19 or 20 wherein said automatic extraction of the specific element of said design procedure document extracts an element which is used in the preparing step of the element belonging to a plurality of belonging groups from the elements of said design procedure document displays a CAD image corresponding to said extracted element.

26. A process for automatically preparing a CAD design procedure document as claimed in Claim 19 or 20 wherein said automatic extraction of the specific element of said design procedure document extracts an element which is used in the preparing steps of three or more elements from the elements of said design procedure document and displays a CAD image corresponding to said extracted element.

27. A process for automatically preparing a CAD design procedure document as claimed in Claim 19 or 20 wherein said automatic extraction of the specific element of said design procedure document extracts a series of element groups which achieve the same task appearing in a plurality of positions or a series of preliminarily registered element groups from said design procedure document and displays a CAD image corresponding to the last element of said extracted element groups.

28. A process for automatically preparing a CAD design procedure document as claimed in Claim 19 or 20 wherein a CAD image of an element which is associated with said CAD image corresponding to said specific element is displayed together therewith.

29. A process for automatically preparing a CAD design procedure document as claimed in Claim 19 or 20 wherein said elements are automatically extracted and rearranged together with their preparing steps for display, a specific element is extracted from said extracted and rearranged elements; and a CAD image corresponding to the extracted element is displayed.

30. A process for automatically preparing a CAD design procedure document as claimed in Claim 19 or 20 wherein said displayed design procedure document and CAD image are displayed in EXCEL or HTML format.

31. An apparatus for automatically preparing a CAD design procedure document which is prepared by automatically converting CAD data into the design procedure document which is written in a natural language by using a converting apparatus, **characterized in that** said design procedure document comprises elements which are written in a natural language, a preparing step being written for each element;
a specific element of said design procedure document is automatically extracted; and a CAD image corresponding to said extracted element is displayed.

32. An apparatus for preparing a design procedure document using a method of converting CAD knowledge codes used in a knowledge-base CAD into the design procedure document written in a natural language,
**characterized in that** said CAD knowledge codes are output from said knowledge-base CAD; said output CAD knowledge codes are converted into intermediate representation codes which do not depend upon said knowledge-base CAD by using an intermediate representation code converting apparatus; and said intermediate representation codes are converted into said design procedure document corresponding to said intermediate representation codes by using a document describing and generating apparatus;
said design procedure document comprises elements which are written in a natural language, a preparing step being written for each element;
a specific element of said design procedure document is automatically extracted; and a CAD image corresponding to said extracted element is displayed.

33. An apparatus for automatically preparing a CAD design procedure document as claimed in Claim 31 or 32 wherein said automatic extraction of the specific element of said design procedure document identifies sequential design steps and extracts an element to display a CAD image for each group of said sequential design steps.

34. An apparatus for automatically preparing a CAD design procedure document as claimed in Claim 31 or 32 wherein said automatic extraction of the specific element of said design procedure document extracts a sketch element to prepare a sketch from the preparing step of the element of said design procedure document and displays a CAD image corresponding to the element having said sketch element.

35. An apparatus for automatically preparing a CAD design procedure document as claimed in Claim 31 or 32 wherein said automatic extraction of the specific element of said design procedure document extracts an element, the name of which is named by a designer or CAD operator from the elements of said design procedure document and displays a CAD image corresponding to said named element.

36. An apparatus for automatically preparing a CAD design procedure document as claimed in Claim 31 or 32 wherein said automatic extraction of the specific element of said design procedure document extracts an element which uses the element of other CAD data from the elements of said design procedure document and displays a CAD image corresponding to said extracted element.

37. An apparatus for automatically preparing a CAD design procedure document as claimed in Claim 31 or 32 wherein said automatic extraction of the specific element of said design procedure document extracts an element which is used in the preparing step of the element belonging to a plurality of belonging groups from the elements of said design procedure document displays a CAD image corresponding to said extracted element.

38. An apparatus for automatically preparing a CAD design procedure document as claimed in Claim 31 or 32 wherein said automatic extraction of the specific element of said design procedure document extracts an element which is used in the preparing steps of three or more elements from the elements of said design procedure document and displays a CAD image corresponding to said extracted element.

39. An apparatus for automatically preparing a CAD design procedure document as claimed in Claim 31 or 32 wherein said automatic extraction of the specific element of said design procedure document extracts a series of element groups which achieve the same task appearing in a plurality of positions or a series of preliminarily registered element groups from said design procedure document and displays a CAD image corresponding to the last element of said extracted element groups.

40. An apparatus for automatically preparing a CAD design procedure document as claimed in Claim 31 or 32 wherein a CAD image of an element which is associated with said CAD image corresponding to said specific element is displayed together therewith.

41. An apparatus for automatically preparing a CAD design procedure document as claimed in Claim 31 or 32 wherein said element are automatically extracted and rearranged together with their preparing steps for display, a specific element is extracted from said extracted and rearranged elements; and a CAD image corresponding to the extracted element is displayed.

42. An apparatus for automatically preparing a CAD design procedure document as claimed in Claim 31 or 32 wherein said displayed design procedure document and CAD image are displayed in EXCEL or HTML format.
